# EUROPEAN PATENT APPLICATION

(11) **EP 3 006 997 A1**
(43) Date of publication of application: **13.04.2016**
(21) Application number: 14825726.4
(22) Date of filing: 08.07.2014
(51) Int. Cl.: G02F 1/29

(54) **STEREO IMAGING APPARATUS, METHOD, AND DISPLAY**

(30) Priority: 19.07.2013 CN 201310307101
(71) Applicant: Huawei Technologies Co., Ltd., Longgang District Shenzhen, Guangdong 518129 (CN); University of Cambridge, Cambridgeshire CB2 1PZ (GB)
(72) Inventor: CHU, Daping, Cambridgeshire (GB); ROBERTSON, Brian, Cambridgeshire (GB); ZHOU, Jiong, Shenzhen Guangdong 518129 (CN); YAO, Jun, Shenzhen Guangdong 518129 (CN)
(74) Representative: Kreuz, Georg Maria
(86) International application number: PCT/CN2014/081795
(87) International publication number: WO 2015/007171

(57) **Abstract**

Embodiments of the present invention provide a stereoscopic imaging apparatus and method, and a display. The stereoscopic imaging apparatus includes: a display panel, which includes multiple pixel units, and is configured to display images in a time division multiplexing scheme; and an electro-optic modulation layer, which includes multiple electro-optic modulation units respectively arranged at positions corresponding to the multiple pixel units, and is configured to alternately deflect light rays of the images displayed on the multiple pixel units into different projection directions according to applied electric fields that change in a time division multiplexing scheme, where the electric fields that change in a time division multiplexing scheme change synchronously with the images displayed in a time division multiplexing scheme. The technical solutions of the embodiments of the present invention can improve resolution of auto-stereoscopic display.

## Description

This application claims priority to Chinese Patent Application No. 201310307101.9, filed with the Chinese Patent Office on July 19, 2013 and entitled "STEREOSCOPIC IMAGING APPARATUS AND METHOD, AND DISPLAY", which is incorporated by reference in its entirety.

### TECHNICAL FIELD

The present invention relates to display technologies, and in particular, to a stereoscopic imaging apparatus and method, and a display.

### BACKGROUND

Auto-stereoscopic (auto-stereoscopic) display is also referred to as a naked-eye two-view display or a naked-eye three-dimensional display or a binocular stereoscopic parallax display. In an existing auto-stereoscopic display, each microlens covers multiple pixels, and a stereoscopic image is produced on a central depth plane (central depth plane). When focusing two eyes on the central depth plane, a user can see the stereoscopic image.

In a conventional technical solution, an array of microlenses having fixed refractive indexes (that is, a static microlens array) are used, and light rays of an image corresponding to a specified pixel are refracted into N different directions. In this solution, in each direction, resolution of the stereoscopic image is reduced (that is, the resolution is 1/N of a total quantity of pixels).

### SUMMARY

Embodiments of the present invention provide a stereoscopic imaging apparatus and method, and a display, which can improve resolution of auto-stereoscopic display.

According to a first aspect, a stereoscopic imaging apparatus is provided, where the apparatus includes: a display panel, which includes multiple pixel units, and is configured to display images in a time division multiplexing scheme; and an electro-optic modulation layer, which includes multiple electro-optic modulation units respectively arranged at positions corresponding to the multiple pixel units, and is configured to alternately deflect light rays of the images displayed on the multiple pixel units into different projection directions according to applied electric fields that change in a time division multiplexing scheme, where the electric fields that change in a time division multiplexing scheme change synchronously with the images displayed in a time division multiplexing scheme.

In a first possible implementation manner, the multiple electro-optic modulation units are in a one-to-one correspondence with the multiple pixel units, and the electro-optic modulation layer includes: an electro-optic modulation medium layer, where the electro modulation medium layer includes electro-optic modulation mediums and has a light-outgoing surface and a light-incoming surface; a first electrode layer, including electrodes located on the light-outgoing surface of the electro-optic modulation medium layer; and a second electrode layer, including electrodes located on the light-incoming surface of the electro-optic modulation medium layer, where each electro-optic modulation unit of the multiple electro-optic modulation units includes an electro-optic modulation medium located in the electro-optic modulation medium layer, at least one first electrode located in the first electrode layer, and at least one second electrode located in the second electrode layer, where the electro-optic modulation medium deflects a light ray of an image displayed on a pixel unit corresponding to the electro-optic modulation medium into a preset projection direction according to an electric field formed by a voltage configuration applied between the at least one first electrode and the at least one second electrode.

With reference to the first possible implementation manner, in a second possible implementation manner, each electro-optic modulation unit of the multiple electro-optic modulation units includes: at least two first electrodes, each configured to receive at least two voltages, and the at least one second electrode is used as a common electrode and is configured to receive a reference voltage.

With reference to the first or second possible implementation manner, in a third possible implementation manner, each electro-optic modulation unit of the multiple electro-optic modulation units includes multiple first electrodes, each configured to receive multiple voltages, where at least two voltages of the multiple voltages are different, so that the electro-optic modulation medium produces a function of an off-axis lens under an effect of an electric field formed by the multiple voltages received on each of the multiple first electrodes and the reference voltage received on the at least one second electrode used as a common electrode, to deflect a light ray into a preset projection direction.

With reference to the second possible implementation manner, in a fourth possible implementation manner, each electro-optic modulation unit of the multiple electro-optic modulation units includes two first electrodes and a resistive film connected between the two first electrodes, where each of the two first electrodes is configured to receive two voltages, where the two voltages are different, so that the electro-optic modulation medium produces a function of a lens having a linear phase tilt under an effect of an electric field formed by the two voltages received on each of the two first electrodes and the reference voltage received on the at least one second electrode used as a common electrode, to deflect a light ray into a preset projection direction.

With reference to any one of the second to fourth possible implementation manners, in a fifth possible implementation manner, each electro-optic modulation unit of the multiple electro-optic modulation units deflects a light ray of an image displayed on a pixel unit corresponding to the electro-optic modulation medium into a first projection direction in a first time period according to an electric field formed by a first voltage configuration received between the at least two first electrodes and the at least one second electrode used as a common electrode, and deflects a light ray of an image displayed on the pixel unit corresponding to the electro-optic modulation medium into a second projection direction in a second time period according to an electric field formed by a second voltage configuration received between the at least two first electrodes and the at least one second electrode used as a common electrode, where the first voltage configuration is different from the second voltage configuration, so that an electric field that changes in a time division multiplexing scheme is formed in the first time period and the second time period.

With reference to the second possible implementation manner, in a sixth possible implementation manner, each electro-optic modulation unit of the multiple electro-optic modulation units includes two first electrodes and a resistive film connected between the two first electrodes, where each of the two first electrodes is configured to receive two voltages, where the two voltages are different, and each of the electro-optic modulation units shares one first electrode with an adjacent electro-optic modulation unit, so that the electro-optic modulation medium produces a function of a lens having a linear phase tilt under an effect of an electric field formed by the two voltages received on each of the two first electrodes and the reference voltage received on the at least one second electrode used as a common electrode, to deflect a light ray into a preset projection direction.

With reference to the sixth possible implementation manner, in a seventh possible implementation manner, each electro-optic modulation unit of the multiple electro-optic modulation units deflects a light ray of an image displayed on a pixel unit corresponding to the electro-optic modulation medium into a first projection direction in a first time period according to a first voltage configuration received between the two first electrodes and the at least one second electrode used as a common electrode, and deflects a light ray of an image displayed on the pixel unit corresponding to the electro-optic modulation medium into a second projection direction in a second time period according to a second voltage configuration received between the two first electrodes and the at least one second electrode used as a common electrode, and the adjacent electro-optic modulation unit deflects a light ray of an image displayed on a pixel unit corresponding to an electro-optic modulation medium of the adjacent electro-optic modulation unit into the second projection direction in the first time period according to the second voltage configuration received between two first electrodes of the adjacent electro-optic modulation unit and the at least one second electrode used as a common electrode, and deflects a light ray of an image displayed on the pixel unit corresponding to the electro-optic modulation medium of the adjacent electro-optic modulation unit into the first projection direction in the second time period according to the first voltage configuration received between the two first electrodes of the adjacent electro-optic modulation unit and the at least one second electrode used as a common electrode, where the first voltage configuration is different from the second voltage configuration, so that an electric field that changes in a time division multiplexing scheme is formed in the first time period and the second time period.

With reference to any one of the second to seventh possible implementation manners, in an eighth possible implementation manner, each electro-optic modulation unit of the multiple electro-optic modulation units includes at least two second electrodes, where an arrangement direction of the at least two second electrodes is different from an arrangement direction of the at least two first electrodes; when the stereoscopic imaging apparatus is in a first direction, each of the at least two first electrodes receives the at least two voltages, and the at least two second electrodes are used as common electrodes to receive the reference voltage; and when the stereoscopic imaging apparatus is in a second direction, the at least two first electrodes are used as common electrodes to receive the reference voltage, and each of the at least two second electrodes receives the at least two voltages.

With reference to the eighth possible implementation manner, in a ninth possible implementation manner, each electro-optic modulation unit of the multiple electro-optic modulation units includes multiple second electrodes, each configured to receive multiple voltages, where at least two voltages of the multiple voltages are different, so that the electro-optic modulation medium produces a function of an off-axis lens under an effect of an electric field formed by the multiple voltages received on each of the multiple second electrodes and the reference voltage received on the at least two first electrodes used as common electrodes, to deflect a light ray into a preset projection direction.

With reference to the eighth possible implementation manner, in a tenth possible implementation manner, each electro-optic modulation unit of the multiple electro-optic modulation units includes two second electrodes and a resistive film connected between the two second electrodes, where each of the two second electrodes is configured to receive two voltages, where the two voltages are different, so that the electro-optic modulation medium produces a function of a lens having a linear phase tilt under an effect of an electric field formed by the two voltages received on each of the two second electrodes and the reference voltage received on the at least two first electrodes used as common electrodes, to deflect a light ray into a preset projection direction.

With reference to any one of the eighth to tenth possible implementation manners, in an eleventh possible implementation manner, each electro-optic modulation unit of the multiple electro-optic modulation units deflects a light ray of an image displayed on a pixel unit corresponding to the electro-optic modulation medium into a third projection direction in a third time period according to a third voltage configuration received between the at least two first electrodes used as common electrodes and the at least two second electrodes, and deflects a light ray of an image displayed on the pixel unit corresponding to the electro-optic modulation medium into a fourth projection direction in a fourth time period according to a fourth voltage configuration received between the at least two first electrodes used as common electrodes and the at least two second electrodes, where the third voltage configuration is different from the fourth voltage configuration, so that an electric field that changes in a time division multiplexing scheme is formed in the third time period and the fourth time period.

With reference to the eighth possible implementation manner, in a twelfth possible implementation manner, each electro-optic modulation unit of the multiple electro-optic modulation units includes two second electrodes and a resistive film connected between the two second electrodes, where each of the two second electrodes is configured to receive two voltages, where the two voltages are different, and each of the electro-optic modulation units shares one second electrode with an adjacent electro-optic modulation unit, so that the electro-optic modulation medium produces a function of a lens having a linear phase tilt under an effect of an electric field formed by the two voltages received on each of the two second electrodes and the reference voltage received on the at least two first electrodes used as common electrodes, to deflect a light ray into a preset projection direction.

With reference to the twelfth possible implementation manner, in a thirteenth possible implementation manner, each electro-optic modulation unit of the multiple electro-optic modulation units deflects a light ray of an image displayed on a pixel unit corresponding to the electro-optic modulation medium into a third projection direction in a third time period according to a third voltage configuration received between the two first electrodes and the at least two second electrodes used as common electrodes, and deflects a light ray of an image displayed on the pixel unit corresponding to the electro-optic modulation medium into a fourth projection direction in a fourth time period according to a fourth voltage configuration received between the two first electrodes used as common electrodes and the two second electrodes, and the adjacent electro-optic modulation unit deflects a light ray of an image displayed on a pixel unit corresponding to an electro-optic modulation medium of the adjacent electro-optic modulation unit into the fourth projection direction in the third time period according to the fourth voltage configuration received between two first electrodes used as common electrodes and at least two second electrodes of the adjacent electro-optic modulation unit, and deflects a light ray of an image displayed on the pixel unit corresponding to the electro-optic modulation medium of the adjacent electro-optic modulation unit into the third projection direction in the fourth time period according to the third voltage configuration received between the two second electrodes used as common electrodes and the two first electrodes of the adjacent electro-optic modulation unit, where the third voltage configuration is different from the fourth voltage configuration, so that an electric field that changes in a time division multiplexing scheme is formed in the third time period and the fourth time period.

With reference to any one of the second to seventh possible implementation manners, in a fourteenth possible implementation manner, the at least one second electrode includes a continuous indium tin oxide ITO transparent conductive film.

With reference to any one of the first to fourteenth possible implementation manners, in a fifteenth possible implementation manner, the electro-optic modulation medium includes a liquid crystal or a lithium niobate crystal.

With reference to any one of the first to fifteenth possible implementation manners, in a sixteenth possible implementation manner, a width of each of the electro-optic modulation units is less than or equal to 75•m.

With reference to any one of the first to sixteenth possible implementation manners, in a seventeenth possible implementation manner, within a unit length in at least one direction of the stereoscopic imaging apparatus, a quantity of electrodes included in the electro-optic modulation units is greater than a quantity of pixel units.

With reference to any one of the first to seventeenth possible implementation manners, in an eighteenth possible implementation manner, in a case in which no electric field is applied, the electro-optic modulation layer causes the display panel to present a two-dimensional image.

According to a second aspect, a stereoscopic imaging apparatus is provided, where the apparatus includes: a display panel, which includes multiple pixel units, and is configured to display images; and an electro-optic modulation layer, including multiple electro-optic modulation units, where each electro-optic modulation unit of the multiple electro-optic modulation units includes an electro-optic modulation medium, at least two first electrodes located on a light-outgoing surface of the electro-optic modulation medium, and at least two second electrodes located on a light-incoming surface of the electro-optic modulation medium layer, where the electro-optic modulation medium deflects a light ray of an image displayed on a pixel unit corresponding to the electro-optic modulation medium into a preset projection direction according to an electric field formed by a voltage configuration received between the at least two first electrodes and the at least two second electrodes, and an arrangement direction of the at least two first electrodes is different from an arrangement direction of the at least two second electrodes.

In a first possible implementation manner, when the stereoscopic imaging apparatus is in a first direction, each of the at least two first electrodes receives at least two voltages, and when the stereoscopic imaging apparatus is in a second direction, the at least two first electrodes are used as common electrodes to receive a reference voltage; and when the stereoscopic imaging apparatus is in the first direction, the at least two second electrodes are used as common electrodes to receive the reference voltage, and when the stereoscopic imaging apparatus is in the second direction, each of the at least two second electrodes receives the at least two voltages.

With reference to the first possible implementation manner of the second aspect, in a second possible implementation manner, each electro-optic modulation unit of the multiple electro-optic modulation units includes multiple first electrodes, each configured to receive multiple voltages, where at least two voltages of the multiple voltages are different, so that the electro-optic modulation medium produces a function of an off-axis lens under an effect of an electric field formed by the multiple voltages received on each of the multiple first electrodes and the reference voltage received on the at least two second electrodes used as common electrodes, to deflect a light ray into a preset projection direction; and each electro-optic modulation unit of the multiple electro-optic modulation units includes multiple second electrodes, each configured to receive multiple voltages, where at least two voltages of the multiple voltages are different, so that the electro-optic modulation medium produces a function of an off-axis lens under an effect of an electric field formed by the multiple voltages received on each of the multiple second electrodes and the reference voltage received on the at least two first electrodes used as common electrodes, to deflect a light ray into a preset projection direction.

With reference to the first possible implementation manner of the second aspect, in a third possible implementation manner, each electro-optic modulation unit of the multiple electro-optic modulation units includes two first electrodes and a resistive film connected between the two first electrodes, where each of the two first electrodes is configured to receive two voltages, where the two voltages are different, so that the electro-optic modulation medium produces a function of a lens having a linear phase tilt under an effect of an electric field formed by the two voltages received on each of the two first electrodes and the reference voltage received on the common electrodes, to deflect a light ray into a preset projection direction; and each electro-optic modulation unit of the multiple electro-optic modulation units includes two second electrodes and a resistive film connected between the two second electrodes, where each of the two second electrodes included in the at least two second electrodes is configured to receive two voltages, where the two voltages are different, so that the electro-optic modulation medium produces a function of a lens having a linear phase tilt under an effect of an electric field formed by the two voltages received on each of the two second electrodes and the reference voltage received on the at least two first electrodes used as common electrodes, to deflect a light ray into a preset projection direction.

With reference to the first possible implementation manner of the second aspect, in a fourth possible implementation manner, each electro-optic modulation unit of the multiple electro-optic modulation units includes two first electrodes and a resistive film connected between the two first electrodes, where each of the two first electrodes is configured to receive two voltages, where the two voltages are different, and each of the electro-optic modulation units shares one first electrode with an adjacent electro-optic modulation unit, so that the electro-optic modulation medium produces a function of a lens having a linear phase tilt under an effect of an electric field formed by the two voltages received on each of the two first electrodes and the reference voltage received on the at least two second electrodes used as common electrodes, to deflect a light ray into a preset projection direction; and each electro-optic modulation unit of the multiple electro-optic modulation units includes two second electrodes and a resistive film connected between the two second electrodes, where each of the two second electrodes is configured to receive two voltages, where the two voltages are different, and each of the electro-optic modulation units shares one second electrode with an adjacent electro-optic modulation unit, so that the electro-optic modulation medium produces a function of a lens having a linear phase tilt under an effect of an electric field formed by the two voltages received on each of the two second electrodes and the reference voltage received on the at least two second electrodes used as common electrodes, to deflect a light ray into a preset projection direction.

With reference to the second aspect or any one of the foregoing possible implementation manners of the second aspect, in a fifth possible implementation manner, the display panel displays the images in a time division multiplexing scheme, and the multiple electro-optic modulation units alternately deflect light rays of the images displayed on the multiple pixel units into different projection directions according to electric fields that change in a time division multiplexing scheme and are formed by received voltage configurations, where the multiple electro-optic modulation units are in a one-to-one correspondence with the multiple pixel units, and the electric fields that change in a time division multiplexing scheme change synchronously with the images displayed in a time division multiplexing scheme.

According to a third aspect, a display is provided, where the display includes: the foregoing stereoscopic imaging apparatus; a backlight layer, which overlaps an electro-optic modulation layer of the stereoscopic imaging apparatus, and is configured to emit backlight; and a control module, configured to control a display panel of the stereoscopic imaging apparatus to display images in a time division multiplexing scheme, and control an electro-optic modulation layer of the stereoscopic imaging apparatus to alternately deflect, according to applied electric fields that change in a time division multiplexing scheme, light rays of the images displayed on the display panel into different projection directions.

In a first possible implementation manner, the control module includes: a direction calculation submodule, configured to calculate projection directions of the images according to information fed back by a sensor; a voltage calculation submodule, configured to calculate voltage configurations corresponding to the projection directions according to the projection directions; a display control submodule, configured to control, according to the projection directions, the display panel of the stereoscopic imaging apparatus to display the images corresponding to the projection directions in a time division multiplexing scheme; and a voltage control submodule, configured to control, according to the voltage configurations, the electric fields that change in a time division multiplexing scheme and are applied to the electro-optic modulation layer of the stereoscopic imaging apparatus, to control the electro-optic modulation layer of the stereoscopic imaging apparatus to alternately deflect the light rays of the images into the different projection directions.

With reference to the first possible implementation manner of the third aspect, in a second possible implementation manner, the information fed back by the sensor includes at least one of the following: human eye position information, gyroscope information, acceleration information, and temperature information.

According to a fourth aspect, a stereoscopic imaging method is provided, where the method includes: displaying images on multiple pixel units in a time division multiplexing scheme; applying electric fields that change in a time division multiplexing scheme to multiple electro-optic modulation units; and alternately deflecting light rays of the images displayed on the multiple pixel units into different projection directions according to the electric fields that change in a time division multiplexing scheme, where the electric fields that change in a time division multiplexing scheme change synchronously with the images displayed in a time division multiplexing scheme.

In a first possible implementation manner, the multiple pixel units are in a one-to-one correspondence with the multiple electro-optic modulation units, and the applying electric fields that change in a time division multiplexing scheme to multiple electro-optic modulation units includes: receiving a voltage configuration between at least one first electrode and at least one second electrode layer of each pixel unit of the multiple pixel units, to form an electric field.

With reference to the first possible implementation manner, in a second possible implementation manner, the receiving a voltage configuration between at least one first electrode and at least one second electrode layer of each pixel unit of the multiple pixel units, to form an electric field includes: receiving at least two voltages on each of at least two first electrodes of each electro-optic modulation unit of the multiple electro-optic modulation units, and receiving a reference voltage on the at least one second electrode.

With reference to the second possible implementation manner of the fourth aspect, in a third possible implementation manner, the receiving at least two voltages on each of at least two first electrodes of each electro-optic modulation unit of the multiple electro-optic modulation units, and receiving a reference voltage on the at least one second electrode includes: receiving multiple voltages on each of multiple first electrodes of each electro-optic modulation unit of the multiple electro-optic modulation units, where at least two voltages of the multiple voltages are different, so that the multiple electro-optic modulation units produce a function of an off-axis lens under an effect of an electric field formed by the multiple voltages received on each of the multiple first electrodes and the reference voltage received on the at least one second electrode, to deflect a light ray into a preset projection direction.

With reference to the second possible implementation manner of the fourth aspect, in a fourth possible implementation manner, the receiving at least two voltages on each of at least two first electrodes of each electro-optic modulation unit of the multiple electro-optic modulation units, and receiving a reference voltage on the at least one second electrode includes: receiving two voltages on each of two first electrodes connected to a resistive film of each electro-optic modulation unit of the multiple electro-optic modulation units, where the two voltages are different, so that each of the electro-optic modulation units produces a function of a lens having a linear phase tilt under an effect of an electric field formed by the two voltages received on each of the two first electrodes and the reference voltage received on the at least one second electrode, to deflect a light ray into a preset projection direction.

With reference to any one of the second to fourth possible implementation manners of the fourth aspect, in a fifth possible implementation manner, the alternately deflecting light rays of the images displayed on the multiple pixel units into different projection directions according to the electric fields that change in a time division multiplexing scheme includes: deflecting, by each electro-optic modulation unit of the multiple electro-optic modulation units, a light ray of an image displayed on a pixel unit corresponding to each of the electro-optic modulation units into a first projection direction in a first time period according to an electric field formed by a first voltage configuration received between the at least two first electrodes and the at least one second electrode used as a common electrode; and deflecting, by each electro-optic modulation unit of the multiple electro-optic modulation units, a light ray of an image displayed on the pixel unit corresponding to each of the electro-optic modulation units into a second projection direction in a second time period according to an electric field formed by a second voltage configuration received between the at least two first electrodes and the at least one second electrode used as a common electrode, where the first voltage configuration is different from the second voltage configuration, so that an electric field that changes in a time division multiplexing scheme is formed in the first time period and the second time period.

With reference to the second possible implementation manner of the fourth aspect, in a sixth possible implementation manner, the receiving at least two voltages on each of at least two first electrodes of each electro-optic modulation unit of the multiple electro-optic modulation units, and receiving a reference voltage on the at least one second electrode includes: receiving two voltages on each of two first electrodes connected to a resistive film of each electro-optic modulation unit of the multiple electro-optic modulation units, where the two voltages are different, and each of the electro-optic modulation units shares one first electrode with an adjacent electro-optic modulation unit, so that each of the electro-optic modulation units produces a function of a lens having a linear phase tilt under an effect of an electric field formed by the two voltages received on each of the two first electrodes and the reference voltage received on the at least one second electrode, to deflect a light ray into a preset projection direction.

With reference to the sixth possible implementation manner of the fourth aspect, in a seventh possible implementation manner, the alternately deflecting light rays of the images displayed on the multiple pixel units into different projection directions according to the electric fields that change in a time division multiplexing scheme includes: deflecting, by each electro-optic modulation unit of the multiple electro-optic modulation units, a light ray of an image displayed on a pixel unit corresponding to each of the electro-optic modulation units into a first projection direction in a first time period according to a first voltage configuration received between the two first electrodes and the at least one second electrode; deflecting, by each electro-optic modulation unit of the multiple electro-optic modulation units, a light ray of an image displayed on the pixel unit corresponding to each of the electro-optic modulation units into a second projection direction in a second time period according to a second voltage configuration received between the two first electrodes and the at least one second electrode; deflecting, by the adjacent electro-optic modulation unit, a light ray of an image displayed on a pixel unit corresponding to the adjacent electro-optic modulation unit into the second projection direction in the first time period according to the second voltage configuration received between two first electrodes of the adjacent electro-optic modulation unit and the at least one second electrode; and deflecting, by the adjacent electro-optic modulation unit, a light ray of an image displayed on the pixel unit corresponding to the adjacent electro-optic modulation unit into the first projection direction in the second time period according to the first voltage configuration received between the two first electrodes of the adjacent electro-optic modulation unit and the at least one second electrode, where the first voltage configuration is different from the second voltage configuration, so that an electric field that changes in a time division multiplexing scheme is formed in the first time period and the second time period.

With reference to any one of the second to seventh possible implementation manners of the fourth aspect, in an eighth possible implementation manner, an arrangement direction of at least two second electrodes of each electro-optic modulation unit of the multiple electro-optic modulation units is different from an arrangement direction of the at least two first electrodes, and the receiving a voltage configuration between at least one first electrode and at least one second electrode layer of each pixel unit of the multiple pixel units, to form an electric field includes: when the stereoscopic imaging apparatus is in a first direction, receiving the at least two voltages on each of the at least two first electrodes, and receiving the reference voltage on the at least two second electrodes used as common electrodes, where the stereoscopic imaging method further includes: when the stereoscopic imaging apparatus is in a second direction, receiving the reference voltage on the at least two first electrodes used as common electrodes, and receiving the at least two voltages on each of the at least two second electrodes.

With reference to the eighth possible implementation manner of the fourth aspect, in a ninth possible implementation manner, the receiving the at least two voltages on each of the at least two second electrodes includes: receiving multiple voltages on each of multiple second electrodes of each electro-optic modulation unit of the multiple electro-optic modulation units, where at least two voltages of the multiple voltages are different, so that each of the electro-optic modulation units produces a function of an off-axis lens under an effect of an electric field formed by the multiple voltages received on each of the multiple second electrodes and the reference voltage received on the at least two first electrodes used as common electrodes, to deflect a light ray into a preset projection direction.

With reference to the eighth possible implementation manner of the fourth aspect, in a tenth possible implementation manner, the receiving the at least two voltages on each of the at least two second electrodes includes: receiving two voltages on each of two second electrodes connected to a resistive film of each electro-optic modulation unit of the multiple electro-optic modulation units, where the two voltages are different, so that each of the electro-optic modulation units produces a function of a lens having a linear phase tilt under an effect of an electric field formed by the two voltages received on each of the two second electrodes and the reference voltage received on the at least two first electrodes used as common electrodes, to deflect a light ray into a preset projection direction.

With reference to any one of the eighth to tenth possible implementation manners of the fourth aspect, in an eleventh possible implementation manner, each electro-optic modulation unit of the multiple electro-optic modulation units deflects a light ray of an image displayed on a pixel unit corresponding to each of the electro-optic modulation units into a third projection direction in a third time period according to a third voltage configuration received between the at least two first electrodes used as common electrodes and the at least two second electrodes; and each electro-optic modulation unit of the multiple electro-optic modulation units deflects a light ray of an image displayed on the pixel unit corresponding to each of the electro-optic modulation units into a fourth projection direction in a fourth time period according to a fourth voltage configuration received between the at least two first electrodes used as common electrodes and the at least two second electrodes, where the third voltage configuration is different from the fourth voltage configuration, so that an electric field that changes in a time division multiplexing scheme is formed in the third time period and the fourth time period.

With reference to the eighth possible implementation manner of the fourth aspect, in a twelfth possible implementation manner, the receiving the at least two voltages on each of the at least two second electrodes includes: receiving two voltages on each of two second electrodes connected to a resistive film of each electro-optic modulation unit of the multiple electro-optic modulation units, where the two voltages are different, and each of the electro-optic modulation units shares one second electrode with an adjacent electro-optic modulation unit, so that each of the electro-optic modulation units produces a function of a lens having a linear phase tilt under an effect of an electric field formed by the two voltages received on each of the two second electrodes and the reference voltage received on the at least two first electrodes used as common electrodes, to deflect a light ray into a preset projection direction.

With reference to the twelfth possible implementation manner of the fourth aspect, in a thirteenth possible implementation manner, each electro-optic modulation unit of the multiple electro-optic modulation units deflects a light ray of an image displayed on a pixel unit corresponding to each of the electro-optic modulation units into a third projection direction in a third time period according to a third voltage configuration received between the two first electrodes and the at least two second electrodes used as common electrodes; each electro-optic modulation unit of the multiple electro-optic modulation units deflects a light ray of an image displayed on the pixel unit corresponding to each of the electro-optic modulation units into a fourth projection direction in a fourth time period according to a fourth voltage configuration received between the two first electrodes used as common electrodes and the two second electrodes; the adjacent electro-optic modulation unit deflects a light ray of an image displayed on a pixel unit corresponding to the adjacent electro-optic modulation unit into the fourth projection direction in the third time period according to the fourth voltage configuration received between two first electrodes used as common electrodes and at least two second electrodes of the adjacent electro-optic modulation unit; and the adjacent electro-optic modulation unit deflects a light ray of an image displayed on the pixel unit corresponding to the adjacent electro-optic modulation unit into the third projection direction in the fourth time period according to the fourth voltage configuration received between the two second electrodes used as common electrodes and the two first electrodes of the adjacent electro-optic modulation unit, where the third voltage configuration is different from the fourth voltage configuration, so that an electric field that changes in a time division multiplexing scheme is formed in the third time period and the fourth time period.

According to a fifth aspect, a stereoscopic imaging method is provided, where the method includes: displaying images on multiple pixel units; receiving a voltage configuration between at least two first electrodes and at least two second electrodes of each electro-optic modulation unit of multiple electro-optic modulation units, to form an electric field; and deflecting a light ray of an image displayed on a pixel unit corresponding to each of the electro-optic modulation units into a preset projection direction according to the electric field, where an arrangement direction of the at least two first electrodes is different from an arrangement direction of the at least two second electrodes.

In a first possible implementation manner, the receiving a voltage configuration between at least two first electrodes and at least two second electrodes of each electro-optic modulation unit of multiple electro-optic modulation units, to form an electric field includes: when the stereoscopic imaging apparatus is in a first direction, receiving at least two voltages on each of the at least two first electrodes, and using the at least two second electrodes as common electrodes to receive a reference voltage; and when the stereoscopic imaging apparatus is in a second direction, using the at least two first electrodes as common electrodes to receive the reference voltage, and receiving the at least two voltages on each of the at least two second electrodes.

With reference to the first possible implementation manner of the fifth aspect, in a second possible implementation manner, the receiving at least two voltages on each of the at least two first electrodes includes: receiving multiple voltages on each of multiple first electrodes, where at least two voltages of the multiple voltages are different, so that each of the electro-optic modulation units produces a function of an off-axis lens under an effect of an electric field formed by the multiple voltages received on each of the multiple first electrodes and the reference voltage received on the at least two second electrodes used as common electrodes, to deflect a light ray into a preset projection direction, where the receiving the at least two voltages on each of the at least two second electrodes includes: receiving multiple voltages on each of multiple second electrodes, where at least two voltages of the multiple voltages are different, so that each of the electro-optic modulation units produces a function of an off-axis lens under an effect of an electric field formed by the multiple voltages received on each of the multiple second electrodes and the reference voltage received on the at least two first electrodes used as common electrodes, to deflect a light ray into a preset projection direction.

With reference to the first possible implementation manner of the fifth aspect, in a third possible implementation manner, the receiving at least two voltages on each of the at least two first electrodes includes: receiving two voltages on each of two first electrodes connected to a resistive film, where the two voltages are different, so that each of the electro-optic modulation units produces a function of a lens having a linear phase tilt under an effect of an electric field formed by the two voltages received on each of the two first electrodes and the reference voltage received on the at least two second electrodes used as common electrodes, to deflect a light ray into a preset projection direction, where the receiving the at least two voltages on each of the at least two second electrodes includes: receiving two voltages on each of two second electrodes connected to a resistive film, where the two voltages are different, so that each of the electro-optic modulation units produces a function of a lens having a linear phase tilt under an effect of an electric field formed by the two voltages received on each of the two second electrodes and the reference voltage received on the at least two first electrodes used as common electrodes, to deflect a light ray into a preset projection direction.

With reference to the first possible implementation manner of the fifth aspect, in a fourth possible implementation manner, the receiving at least two voltages on each of the at least two first electrodes includes: receiving two voltages on each of two first electrodes connected to a resistive film, where the two voltages are different, and each of the electro-optic modulation units shares one first electrode with an adjacent electro-optic modulation unit, so that each of the electro-optic modulation units produces a function of a lens having a linear phase tilt under an effect of an electric field formed by the two voltages received on each of the two first electrodes and the reference voltage received on the at least two second electrodes used as common electrodes, to deflect a light ray into a preset projection direction, where the receiving the at least two voltages on each of the at least two second electrodes includes: receiving two voltages on each of two second electrodes connected to a resistive film, where the two voltages are different, and each of the electro-optic modulation units shares one second electrode with an adjacent electro-optic modulation unit, so that each of the electro-optic modulation units produces a function of a lens having a linear phase tilt under an effect of an electric field formed by the two voltages received on each of the two second electrodes and the reference voltage received on the at least two first electrodes used as common electrodes, to deflect a light ray into a preset projection direction.

With reference to the fifth aspect or any one of the possible implementation manners of the fifth aspect, the multiple electro-optic modulation units are in a one-to-one correspondence with the multiple pixel units, and the displaying images of different projection directions on multiple pixel units includes: displaying the images on the multiple pixel units in a time division multiplexing scheme, where the receiving a voltage configuration between at least two first electrodes and at least two second electrodes of each electro-optic modulation unit of multiple electro-optic modulation units, to form an electric field includes: receiving a voltage configuration that changes in a time division multiplexing scheme between the at least two first electrodes and the at least two second electrodes of each electro-optic modulation unit of the multiple electro-optic modulation units, to form an electric field that changes in a time division multiplexing scheme, where the electric field that changes in a time division multiplexing scheme changes synchronously with the image displayed in a time division multiplexing scheme.

According to the technical solutions of the embodiments of the present invention, images of different directions may be displayed in a time division multiplexing scheme, and light rays of the images displayed on multiple pixel units are deflected into different directions according to applied electric fields that change in a time division multiplexing scheme, so that resolution of an image displayed in each direction is all the pixel units of a display panel, thereby improving resolution of auto-stereoscopic display.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic structural diagram of a stereoscopic imaging apparatus according to an embodiment of the present invention;
FIG. 2 is a schematic diagram of liquid crystal molecule states before and after an electric field is applied to an electro-optic modulation unit according to an embodiment of the present invention;
FIG. 3 is a schematic diagram of different display states of a stereoscopic imaging apparatus according to an embodiment of the present invention;
FIG. 4 is a schematic structural diagram of a stereoscopic imaging apparatus according to another embodiment of the present invention;
FIG. 5 is a schematic structural diagram of a display according to an embodiment of the present invention;
FIG. 6 is a schematic sectional diagram of a stereoscopic imaging apparatus according to an embodiment of the present invention;
FIG. 7 is a schematic diagram of a stereoscopic imaging apparatus according to another embodiment of the present invention;
FIG. 8 is a schematic diagram of a stereoscopic imaging apparatus according to another embodiment of the present invention;
FIG. 9 is a schematic diagram of two display states of a stereoscopic imaging apparatus according to an embodiment of the present invention;
FIG. 10 is a schematic diagram of an electrode configuration of a stereoscopic imaging apparatus according to another embodiment of the present invention;
FIG. 11 is a schematic flowchart of a stereoscopic imaging method according to an embodiment of the present invention; and
FIG. 12 is a schematic flowchart of a stereoscopic imaging method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In the embodiments of the present invention, stereoscopic imaging may refer to three-dimensional display or auto-stereoscopic display.

In addition to low resolution, an array of microlenses having fixed refractive indexes also cause inability of a stereoscopic imaging apparatus to switch between stereoscopic imaging and two-dimensional imaging, and after the stereoscopic imaging apparatus rotates 90 degrees, an effect of stereoscopic imaging disappears completely. Moreover, because each microlens covers multiple pixels, crosstalk (crosstalk) is caused, that is, one eye sees an image that the other eye should see. To overcome the foregoing disadvantages of an array of microlenses having fixed refractive indexes, the embodiments of the present invention provide an auto-stereoscopic display solution that uses an array of flexible (or electrically adjustable) prisms in combination with a time division multiplexing technology.

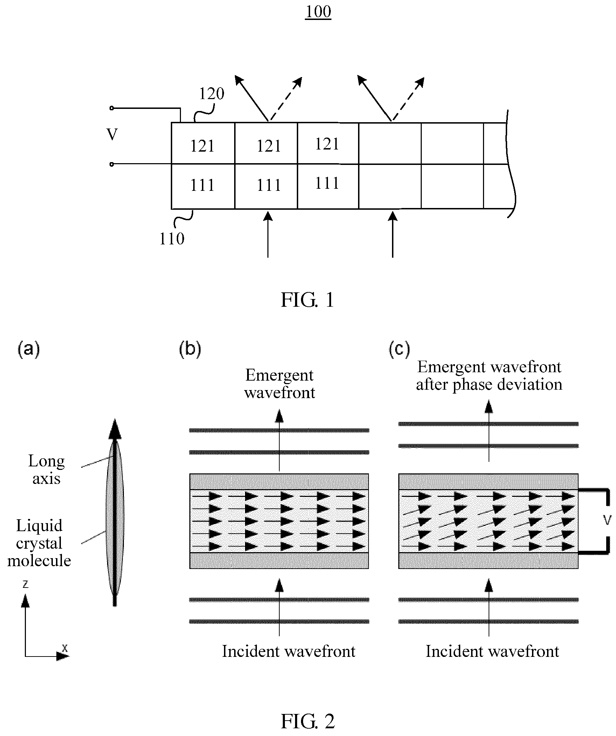

FIG. 1 is a schematic structural diagram of a stereoscopic imaging apparatus 100 according to an embodiment of the present invention. The stereoscopic imaging apparatus 100 includes: a display panel 110 and an electro-optic modulation layer 120.

The display panel (or a display unit) 110 includes multiple pixel units 111, and is configured to display images in a time division multiplexing scheme, for example, display images of different projection directions, where different projection directions correspond to different observation directions. The electro-optic modulation layer 120 includes multiple electro-optic modulation units 121 respectively arranged at positions corresponding to the multiple pixel units, and is configured to alternately deflect light rays of the images displayed on the multiple pixel units into different projection directions according to applied electric fields E that change in a time division multiplexing scheme, to present a stereoscopic image, for example, to produce a stereoscopic image that can be seen by naked eyes on a central depth plane.

For example, the multiple electro-optic modulation units may be directly disposed on the pixel units, or may be disposed at a position that completely covers or wraps the multiple pixel units. For example, there is an interval (space)/or a spacer (a filler, a partition board, an insulating board, or the like) between the pixel units and the electro-optic modulation units.

According to this embodiment of the present invention, the electro-optic modulation layer may be formed by liquid crystals. After an electric field is applied to a liquid crystal, a refractive index of the liquid crystal can be changed, and different electric fields may correspond to different refractive indexes. That is, liquid crystals are used in the electro-optic modulation layer to form an array of electrically adjustable prisms. When a light ray passes through a liquid crystal to which an electric field is applied, a phase difference of an emergent ray changes with the external applied electric field. This embodiment of the present invention is not limited thereto. The electro-optic modulation layer may also be formed by another crystal material whose refractive index can be changed when an electric field is applied, for example, may be formed by lithium niobate crystals.

According to this embodiment of the present invention, electrodes may be arranged on two opposite planes of a liquid crystal, and an electric field is applied to the liquid crystal by applying voltages to the electrodes.

In the electro-optic modulation layer 120, a liquid crystal included in each of the electro-optic modulation units is equivalent to a microlens after an electric field is applied, and the multiple electro modulation units form a microlens array. FIG. 2 is a schematic diagram of liquid crystal molecule states before and after an electric field is applied to an electro-optic modulation unit according to an embodiment of the present invention. For example, referring to (a) in FIG. 2, for a nematic liquid crystal material, a liquid crystal molecule is shaped like a rod and has one axis, and a longitudinal direction of the rodlike liquid crystal molecule is a long axis direction. Referring to (b) in FIG. 2, for liquid crystal molecules arranged on a same plane, in a case in which no voltage is applied, long axes of the liquid crystal molecules point to a specific direction. Referring to (c) in FIG. 2, when an applied voltage exceeds a threshold voltage of a liquid crystal, the liquid crystal molecules are redirected, that is, are rotated mechanically, causing phase deviation of an incident ray. Such a mechanical rotation is caused by torque produced by a dipole moment induced by an applied voltage.

Three pixel units (for example, red, yellow, and blue pixel units) 111 on the display unit 110 may form one display pixel (or one image pixel), but this embodiment according to the present invention is not limited thereto. For example, each pixel unit on the display unit 110 may form one display pixel.

Observation directions corresponding to different projection methods may include a left-eye observation direction (for example, a direction in which a solid line arrow points in FIG. 1) and a right-eye observation direction (for example, a direction in which a dotted line arrow points to in FIG. 1), but this embodiment according to the present invention is not limited thereto. For example, different observation directions may include multiple left-eye observation directions and multiple right-eye observation directions, so that multiple persons view a stereoscopic image simultaneously.

For example, to enable resolution of a stereoscopic image presented on the stereoscopic imaging apparatus to be all the pixel units, the applied electric fields need to satisfy a requirement that within a time period in which vision persists, an image of each direction is displayed by using all pixels. The time division multiplexing scheme in which the electric fields are applied to the multiple pixel units may be the same as the time division multiplexing scheme in which the images of different projection directions are displayed on the display panel, so that human eyes can observe a stereoscopic image displayed on the multiple pixel units from different observation directions. Two projection directions are used as examples. In a first time period, each of the pixel units displays an image of a first projection direction (for example, corresponding to a right-eye observation direction), and an electro-optic modulation unit corresponding to the pixel unit deflects a light ray emitted by the pixel unit into the first projection direction according to an applied first electric field; and in a second time period, the pixel unit displays an image of a second projection direction (for example, corresponding to a left-eye observation direction), and the electro-optic modulation unit deflects a light ray emitted by the pixel unit into the second projection direction according to an applied second electric field.

According to the technical solution of this embodiment of the present invention, images of different directions may be displayed in a time division multiplexing scheme, and light rays of the images displayed on multiple pixel units are deflected into different directions according to applied electric fields that change in a time division multiplexing scheme, so that resolution of an image displayed in each direction is all the pixel units of a display panel, thereby improving resolution of auto-stereoscopic display.

According to this embodiment of the present invention, in a case in which no electric field is applied, the electro-optic modulation layer further causes the display panel to present a two-dimensional image.

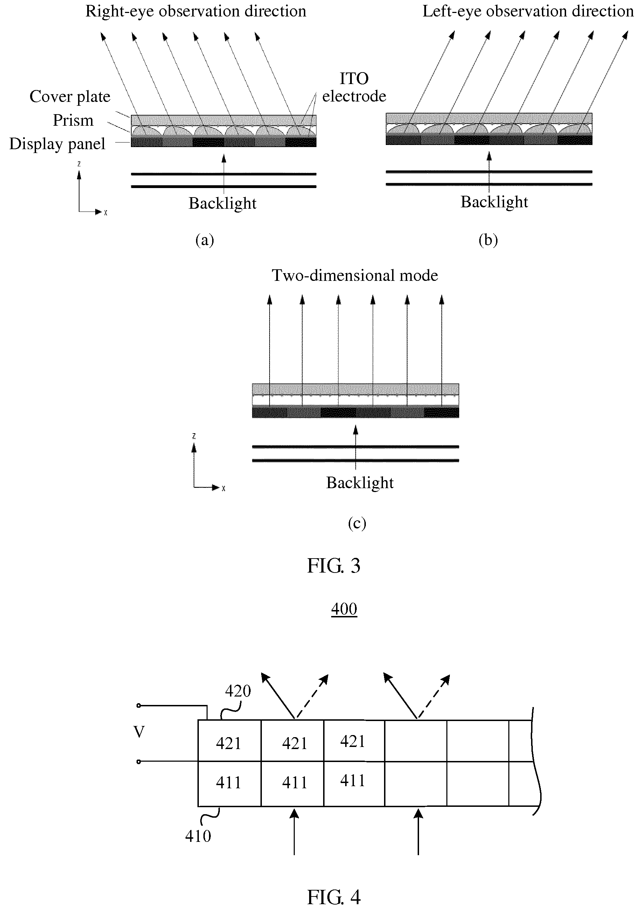

FIG. 3 is a schematic diagram of different display states of a stereoscopic imaging apparatus according to an embodiment of the present invention. Referring to (a) in FIG. 3, in a case in which a first electric field is applied, a liquid crystal forms a prism under an effect of the first electric field, to deflect a light ray produced after backlight is cast onto a display panel into a right-eye observation direction. Referring to (b) in FIG. 3, in a case in which a second electric field is applied, the liquid crystal forms a prism under an effect of the second electric field, to deflect a light ray produced after backlight is cast onto the display panel into a left-eye observation direction. Referring to (c) in FIG. 3, in a case in which no electric field is applied, the liquid crystal does not cause a light ray to deflect, and in this case, a two-dimensional image may be presented.

It should be understood that this embodiment of the present invention is not limited to a case in which all the pixel units display images of a same projection direction in a same time period. For example, in a first time period, pixel units of a first part may display images of a first projection direction, while pixel units of a second part may display images of a second projection direction; and in a second time period, the pixel units of the first part may display images of the second projection direction, while the pixel units of the second part may display images of the first projection direction, as long as images displayed on all the pixel units can be observed from different observation directions within a time period in which human eye vision persists, and in other words, as long as a sum of the first time period and the second time period is less than a time period in which human eye vision persists.

According to this embodiment of the present invention, a view (view) of binocular stereoscopic parallax is displayed each time, and space of the display panel is not divided as in a conventional technical solution. Therefore, compared with that of the conventional technology, the resolution inventionis higher.

It should be understood that during specific implementation, the electro-optic modulation layer may be covered by a glass cover plate, and other mediums may be disposed between the display panel and the electro-optic modulation layer and between the electro-optic modulation layer and the glass cover plate as required.

In this embodiment of the present invention, a dedicated control module may be disposed, to control the display panel to display the images of different projection directions in a time division multiplexing scheme and control the electric fields applied to the electro-optic modulation units to change in a time division multiplexing scheme, so that corresponding images are displayed in different projection directions, thereby forming a stereoscopic image that can be observed by naked eyes.

According to this embodiment of the present invention, the multiple electro-optic modulation units are in a one-to-one correspondence with the multiple pixel units, and the electro-optic modulation layer includes: an electro-optic modulation medium layer, where the electro modulation medium layer includes electro-optic modulation mediums and has a light-outgoing surface and a light-incoming surface; a first electrode layer, including electrodes located on the light-outgoing surface of the electro-optic modulation medium layer; and a second electrode layer, including electrodes located on the light-incoming surface of the electro-optic modulation medium layer, where each electro-optic modulation unit of the multiple electro-optic modulation units includes an electro-optic modulation medium located in the electro-optic modulation medium layer, at least one first electrode located in the first electrode layer, and at least one second electrode located in the second electrode layer, where the electro-optic modulation medium deflects a light ray of an image displayed on a pixel unit corresponding to the electro-optic modulation medium into a preset projection direction according to an electric field formed by a voltage configuration received between the at least one first electrode and the at least one second electrode, to deflect a light ray into a preset projection direction.

According to this embodiment of the present invention, the electrode may be made of a transparent conductive material, for example, a transparent conductive material such as indium tin oxide (Indium Tin Oxide, ITO). The electro-optic modulation medium may include a crystal material such as a liquid crystal or a lithium niobate crystal, that is, the electro-optic modulation medium layer may be a liquid crystal layer or another crystal layer. The at least one second electrode may be a continuous ITO transparent conductive film. For example, the transparent conductive film electrodes are distributed on an inner surface of the cover plate and above an electrolyte substrate, and are configured not only to produce an electric field, but also to separate the display panel and the liquid crystal layer. In this embodiment of the present invention, an adjustable liquid crystal prism may be disposed for each pixel, that is, an adjustable pixel-level liquid crystal prism may be disposed. Therefore, this embodiment of the present invention can eliminate a phenomenon of crosstalk between pixels.

According to this embodiment of the present invention, each electro-optic modulation unit of the multiple electro-optic modulation units includes: at least two first electrodes, each configured to receive at least two voltages, and the at least one second electrode is used as a common electrode and is configured to receive a reference voltage.

The at least two first electrodes may be a series of conductive stripes, and these conductive stripes may be evenly distributed, or may be unevenly distributed, as long as the conductive stripes are arranged in such a way that the electro-optic modulation unit can produce an effect of a microlens or an effect of a linear phase when the conductive stripes receive voltages. A potential difference between a voltage received on each of the first electrodes and the reference voltage forms a corresponding electric field on the liquid crystal layer. The reference voltage may be, for example, 0 V.

According to this embodiment of the present invention, each electro-optic modulation unit of the multiple electro-optic modulation units includes multiple first electrodes, each configured to receive multiple voltages, where at least two voltages of the multiple voltages are different, so that the electro-optic modulation medium produces a function of an off-axis lens under an effect of an electric field formed by the multiple voltages received on each of the multiple first electrodes and the reference voltage received on the at least one second electrode used as a common electrode, to deflect a light ray into a preset projection direction.

According to this embodiment of the present invention, by adjusting voltages received on these electrodes, an electric field can be produced in the liquid crystal layer, to produce a desired phase configuration for the liquid crystal layer. Different phase configurations depend on different voltage configurations and electrode distributions. For example, each of the electro-optic modulation units may include four first electrodes, where one electrode is located on an edge of a pixel unit,and received voltages are V1, V2, V3, and V4. Each of the electro-optic modulation units may include more than four or less than four first electrodes. Due to a smoothness feature of a liquid crystal, four electrodes are enough to produce an approximately smooth phase distribution.

According to this embodiment of the present invention, each electro-optic modulation unit of the multiple electro-optic modulation units includes two first electrodes and a resistive film connected between the two first electrodes, where each of the two first electrodes is configured to receive two voltages, where the two voltages are different, so that the electro-optic modulation medium produces a function of a lens having a linear phase tilt under an effect of an electric field formed by the two voltages received on each of the two first electrodes and the reference voltage received on the at least one second electrode used as a common electrode, to deflect a light ray into a preset projection direction.

For example, the two first electrodes may be two conductive stripes made of ITO materials, and are arranged along two opposite edges of each of the electro-optic modulation units, and preset intervals are kept between the two first electrodes and first electrodes of an adjacent electro-optic modulation unit. The continuous resistive film may be made of a transparent material having a specific resistivity, and is connected between the two conductive stripes, so that when the two first electrodes receive different voltages, a voltage distribution that changes continuously is produced on the resistive film. A potential difference between the voltage distribution that changes continuously and the reference voltage produces an electric field distribution that changes continuously in the liquid crystal layer covered by the resistive film, and the electric field distribution that changes continuously enables a liquid crystal corresponding to the resistive film to produce a function of a lens having a linear phase tilt, to deflect a light ray into a preset projection direction.

According to this embodiment of the present invention, each electro-optic modulation unit of the multiple electro-optic modulation units deflects a light ray of an image displayed on a pixel unit corresponding to the electro-optic modulation medium into a first projection direction in a first time period according to an electric field formed by a first voltage configuration received between the at least two first electrodes and the at least one second electrode used as a common electrode, and deflects a light ray of an image displayed on the pixel unit corresponding to the electro-optic modulation medium into a second projection direction in a second time period according to an electric field formed by a second voltage configuration received between the at least two first electrodes and the at least one second electrode used as a common electrode, where the first voltage configuration is different from the second voltage configuration, so that an electric field that changes in a time division multiplexing scheme is formed in the first time period and the second time period.

For example, the common electrode receives the reference voltage, and each of the at least two first electrodes receives corresponding voltages in the first time period and the second time period.

According to this embodiment of the present invention, each electro-optic modulation unit of the multiple electro-optic modulation units includes two first electrodes and a resistive film connected between the two first electrodes, where each of the two first electrodes is configured to receive two voltages, where the two voltages are different, and each of the electro-optic modulation units shares one first electrode with an adjacent electro-optic modulation unit, so that the electro-optic modulation medium produces a function of a lens having a linear phase tilt under an effect of an electric field formed by the two voltages received on each of the two first electrodes and the reference voltage received on the at least one second electrode used as a common electrode, to deflect a light ray into a preset projection direction.

According to this embodiment of the present invention, each electro-optic modulation unit of the multiple electro-optic modulation units deflects a light ray of an image displayed on a pixel unit corresponding to the electro-optic modulation medium into a first projection direction in a first time period according to a first voltage configuration received between the two first electrodes and the at least one second electrode used as a common electrode, and deflects a light ray of an image displayed on the pixel unit corresponding to the electro-optic modulation medium into a second projection direction in a second time period according to a second voltage configuration received between the two first electrodes and the at least one second electrode used as a common electrode, and the adjacent electro-optic modulation unit deflects a light ray of an image displayed on a pixel unit corresponding to an electro-optic modulation medium of the adjacent electro-optic modulation unit into the second projection direction in the first time period according to the second voltage configuration received between two first electrodes of the adjacent electro-optic modulation unit and the at least one second electrode used as a common electrode, and deflects a light ray of an image displayed on the pixel unit corresponding to the electro-optic modulation medium of the adjacent electro-optic modulation unit into the first projection direction in the second time period according to the first voltage configuration received between the two first electrodes of the adjacent electro-optic modulation unit and the at least one second electrode used as a common electrode, where the first voltage configuration is different from the second voltage configuration, so that an electric field that changes in a time division multiplexing scheme is formed in the first time period and the second time period.

According to this embodiment of the present invention, each electro-optic modulation unit of the multiple electro-optic modulation units includes at least two second electrodes, where an arrangement direction of the at least two second electrodes is different from an arrangement direction of the at least two first electrodes; when the stereoscopic imaging apparatus is in a first direction, each of the at least two first electrodes receives the at least two voltages, and the at least two second electrodes are used as common electrodes to receive the reference voltage; and when the stereoscopic imaging apparatus is in a second direction, the at least two first electrodes are used as common electrodes to receive the reference voltage, and each of the at least two second electrodes receives the at least two voltages.

According to this embodiment of the present invention, each electro-optic modulation unit of the multiple electro-optic modulation units includes multiple second electrodes, each configured to receive multiple voltages, where at least two voltages of the multiple voltages are different, so that the electro-optic modulation medium produces a function of an off-axis lens under an effect of an electric field formed by the multiple voltages received on each of the multiple second electrodes and the reference voltage received on the at least two first electrodes used as common electrodes, to deflect a light ray into a preset projection direction.

According to this embodiment of the present invention, each electro-optic modulation unit of the multiple electro-optic modulation units includes two second electrodes and a resistive film connected between the two second electrodes, where each of the two second electrodes is configured to receive two voltages, where the two voltages are different, so that the electro-optic modulation medium produces a function of a lens having a linear phase tilt under an effect of an electric field formed by the two voltages received on each of the two second electrodes and the reference voltage received on the at least two first electrodes used as common electrodes, to deflect a light ray into a preset projection direction.

According to this embodiment of the present invention, each electro-optic modulation unit of the multiple electro-optic modulation units deflects a light ray of an image displayed on a pixel unit corresponding to the electro-optic modulation medium into a third projection direction in a third time period according to a third voltage configuration received between the at least two first electrodes used as common electrodes and the at least two second electrodes, and deflects a light ray of an image displayed on the pixel unit corresponding to the electro-optic modulation medium into a fourth projection direction in a fourth time period according to a fourth voltage configuration received between the at least two first electrodes used as common electrodes and the at least two second electrodes, where the third voltage configuration is different from the fourth voltage configuration, so that an electric field that changes in a time division multiplexing scheme is formed in the third time period and the fourth time period.

According to this embodiment of the present invention, each electro-optic modulation unit of the multiple electro-optic modulation units includes two second electrodes and a resistive film connected between the two second electrodes, where each of the two second electrodes is configured to receive two voltages, where the two voltages are different, and each of the electro-optic modulation units shares one second electrode with an adjacent electro-optic modulation unit, so that the electro-optic modulation medium produces a function of a lens having a linear phase tilt under an effect of an electric field formed by the two voltages received on each of the two second electrodes and the reference voltage received on the at least two first electrodes used as common electrodes, to deflect a light ray into a preset projection direction.

According to this embodiment of the present invention, each electro-optic modulation unit of the multiple electro-optic modulation units deflects a light ray of an image displayed on a pixel unit corresponding to the electro-optic modulation medium into a third projection direction in a third time period according to a third voltage configuration received between the two first electrodes and the at least two second electrodes used as common electrodes, and deflects a light ray of an image displayed on the pixel unit corresponding to the electro-optic modulation medium into a fourth projection direction in a fourth time period according to a fourth voltage configuration received between the two first electrodes used as common electrodes and the two second electrodes, and the adjacent electro-optic modulation unit deflects a light ray of an image displayed on a pixel unit corresponding to an electro-optic modulation medium of the adjacent electro-optic modulation unit into the fourth projection direction in the third time period according to the fourth voltage configuration received between two first electrodes used as common electrodes and at least two second electrodes of the adjacent electro-optic modulation unit, and deflects a light ray of an image displayed on the pixel unit corresponding to the electro-optic modulation medium of the adjacent electro-optic modulation unit into the third projection direction in the fourth time period according to the third voltage configuration received between the two second electrodes used as common electrodes and the two first electrodes of the adjacent electro-optic modulation unit, where the third voltage configuration is different from the fourth voltage configuration, so that an electric field that changes in a time division multiplexing scheme is formed in the third time period and the fourth time period.

According to this embodiment of the present invention, a width of each of the electro-optic modulation units may be less than or equal to 75 •m.

Optionally, as another embodiment, a width of each of the electro-optic modulation units may be less than or equal to 25 •m.

According to this embodiment of the present invention, within a unit length in at least one direction of the stereoscopic imaging apparatus, a quantity of electrodes included in the electro-optic modulation units is greater than a quantity of pixel units. In other words, an electro-optic modulation unit corresponding to each pixel unit includes more than one electrode.

FIG. 4 is a schematic structural diagram of a stereoscopic imaging apparatus 400 according to another embodiment of the present invention. The stereoscopic imaging apparatus 400 includes: a display panel 410 and an electro-optic modulation layer 420.

The display panel 410 includes multiple pixel units 411, and is configured to display images. The electro-optic modulation layer 420 includes multiple electro-optic modulation units 421, where each electro-optic modulation unit of the multiple electro-optic modulation units includes an electro-optic modulation medium, at least two first electrodes located on a light-outgoing surface of the electro-optic modulation medium, and at least two second electrodes located on a light-incoming surface of the electro-optic modulation medium layer, where the electro-optic modulation medium deflects a light ray of an image displayed on a pixel unit corresponding to the electro-optic modulation medium into a preset projection direction according to an electric field formed by a voltage configuration received between the at least two first electrodes and the at least two second electrodes, and an arrangement direction of the at least two first electrodes is different from an arrangement direction of the at least two second electrodes.

For example, the arrangement direction of the at least two first electrodes is perpendicular to the arrangement direction of the at least two second electrodes. In other words, a longitudinal direction of the at least two first electrodes is perpendicular to a longitudinal direction of the at least two second electrodes.

According to this embodiment of the present invention, when the stereoscopic imaging apparatus is in a first direction, each of the at least two first electrodes receives at least two voltages, and when the stereoscopic imaging apparatus is in a second direction, the at least two first electrodes are used as common electrodes to receive a reference voltage; and when the stereoscopic imaging apparatus is in the first direction, the at least two second electrodes are used as common electrodes to receive the reference voltage, and when the stereoscopic imaging apparatus is in the second direction, each of the at least two second electrodes receives the at least two voltages.

In other words, when the stereoscopic imaging apparatus is in the first direction, each of the at least two first electrodes receives corresponding voltages, and the at least two second electrodes receive the same reference voltage; when the stereoscopic imaging apparatus is in the second direction, each of the at least two second electrodes receives the corresponding voltages, and the at least two first electrodes receive the same reference voltage.

According to this embodiment of the present invention, each electro-optic modulation unit of the multiple electro-optic modulation units includes multiple first electrodes, each configured to receive multiple voltages, where at least two voltages of the multiple voltages are different, so that the electro-optic modulation medium produces a function of an off-axis lens under an effect of an electric field formed by the multiple voltages received on each of the multiple first electrodes and the reference voltage received on the at least two second electrodes used as common electrodes, to deflect a light ray into a preset projection direction; and each electro-optic modulation unit of the multiple electro-optic modulation units includes multiple second electrodes, each configured to receive multiple voltages, where at least two voltages of the multiple voltages are different, so that the electro-optic modulation medium produces a function of an off-axis lens under an effect of an electric field formed by the multiple voltages received on each of the multiple second electrodes and the reference voltage received on the at least two first electrodes used as common electrodes, to deflect a light ray into a preset projection direction.

According to this embodiment of the present invention, each electro-optic modulation unit of the multiple electro-optic modulation units includes two first electrodes and a resistive film connected between the two first electrodes, where each of the two first electrodes is configured to receive two voltages, where the two voltages are different, so that the electro-optic modulation medium produces a function of a lens having a linear phase tilt under an effect of an electric field formed by the two voltages received on each of the two first electrodes and the reference voltage received on the common electrodes; and each electro-optic modulation unit of the multiple electro-optic modulation units includes two second electrodes and a resistive film connected between the two second electrodes, where each of the two second electrodes included in the at least two second electrodes is configured to receive two voltages, where the two voltages are different, so that the electro-optic modulation medium produces a function of a lens having a linear phase tilt under an effect of an electric field formed by the two voltages received on each of the two second electrodes and the reference voltage received on the at least two first electrodes used as common electrodes, to deflect a light ray into a preset projection direction.

According to this embodiment of the present invention, each electro-optic modulation unit of the multiple electro-optic modulation units includes two first electrodes and a resistive film connected between the two first electrodes, where each of the two first electrodes is configured to receive two voltages, where the two voltages are different, and each of the electro-optic modulation units shares one first electrode with an adjacent electro-optic modulation unit, so that the electro-optic modulation medium produces a function of a lens having a linear phase tilt under an effect of an electric field formed by the two voltages received on each of the two first electrodes and the reference voltage received on the at least two second electrodes used as common electrodes; and each electro-optic modulation unit of the multiple electro-optic modulation units includes two second electrodes and a resistive film connected between the two second electrodes, where each of the two second electrodes is configured to receive two voltages, where the two voltages are different, and each of the electro-optic modulation units shares one second electrode with an adjacent electro-optic modulation unit, so that the electro-optic modulation medium produces a function of a lens having a linear phase tilt under an effect of an electric field formed by the two voltages received on each of the two second electrodes and the reference voltage received on the at least two second electrodes used as common electrodes, to deflect a light ray into a preset projection direction.

According to this embodiment of the present invention, the display panel displays the images of different projection directions in a time division multiplexing scheme, and the multiple electro-optic modulation units alternately deflect light rays of the images displayed on the multiple pixel units into the different projection directions according to electric fields that change in a time division multiplexing scheme and are formed by received voltage configurations, where the multiple electro-optic modulation units are in a one-to-one correspondence with the multiple pixel units, and the electric fields that change in a time division multiplexing scheme change synchronously with the images displayed in a time division multiplexing scheme.

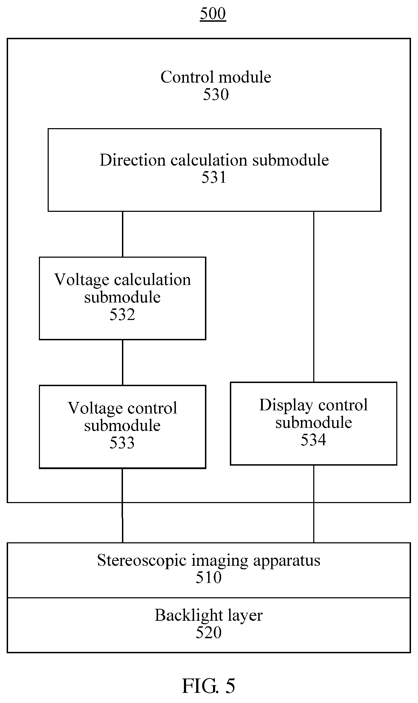

FIG. 5 is a schematic structural diagram of a display 500 according to an embodiment of the present invention. The display 500 includes a stereoscopic imaging apparatus 510, a backlight layer 520, and a control module 530. The backlight layer 520 overlaps an electro-optic modulation layer of the stereoscopic imaging apparatus, and is configured to emit backlight. The stereoscopic imaging apparatus 510 may be the stereoscopic imaging apparatus in the foregoing embodiment. The control module 530 is configured to control a display panel of the stereoscopic imaging apparatus to display images of different projection directions in a time division multiplexing scheme, and control the electro-optic modulation layer of the stereoscopic imaging apparatus to alternately deflect, according to applied electric fields that change in a time division multiplexing scheme, light rays of the images displayed on the display panel into the different projection directions.

According to this embodiment of the present invention, the control module 530 includes: a direction calculation submodule 531, a voltage calculation submodule 532, a voltage control submodule 533, and a display control submodule 534.

Switching of content of stereoscopic display (for example, 3D display) needs to stay synchronous with switching of a microlens array. Content of stereoscopic display may be a same piece of content in different formats that is stored in a local device, or may be a same piece of content in different formats that is stored on a cloud. A stereoscopic display system is described below by using the foregoing electrode configuration in which multiple electrodes are used as an example. The direction calculation submodule 531 is configured to calculate projection directions of the images according to information fed back by a sensor, that is, calculate projection directions (or projection angles) of displayed content according to information feedback. For example, the direction calculation submodule 631 may receive the following information feedback: (1) information feedback of a human eye tracker, for example, human eye position information; (2) information feedback of a gyroscope; and (3) information feedback of another sensor such as an acceleration sensor or a temperature sensor. The direction calculation submodule 531 may provide calculation results of the projection directions of the content to the voltage calculation submodule 532. The voltage calculation submodule 532 is configured to calculate voltage configurations corresponding to the projection directions according to the projection directions, that is, the voltage calculation submodule 532 may obtain corresponding voltage configurations according to the calculation results of the projection directions of the displayed content. For example, a desired voltage sequence pattern of electrodes is obtained by performing calculation or querying a table, and the voltage configuration (or the voltage sequence pattern) is input into the voltage control submodule 533 for controlling values of voltages (for example, V1, V2, V3, and V4) received on multiple electrodes, thereby controlling a phase feature of an electro-optic modulation unit (for example, an electrically adjustable liquid crystal). The voltage control submodule 533 is configured to control, according to the voltage configurations, the electric fields that change in a time division multiplexing scheme and are applied to the electro-optic modulation layer of the stereoscopic imaging apparatus, to control the electro-optic modulation layer of the stereoscopic imaging apparatus to alternately deflect the light rays of the images into the different projection directions. The display control submodule 534 is configured to control, according to the projection directions, the display panel of the stereoscopic imaging apparatus to display the images corresponding to the projection directions in a time division multiplexing scheme.

For the rotatable stereoscopic imaging apparatus, if the displayed content is stored on a cloud, when a signal indicating that the stereoscopic imaging apparatus rotates 90 degrees is fed back to a cloud server, the cloud server may transmit content of stereoscopic display after the rotation to the stereoscopic imaging apparatus according to an identified screen feature of the stereoscopic imaging apparatus. According to a difference in a terminal device in which the stereoscopic imaging apparatus is located, the sensor may include a micro sensor such as a head tracker, an eye tracker, a view point tracker, a gyroscope, or a gravity accelerator. According to this embodiment of the present invention, a suitable auto-stereoscopic display axis may be determined according to feedback information of the sensor, then a voltage mode required by the liquid crystal lens array is learned, and then suitable content of stereoscopic display is displayed.

The stereoscopic imaging apparatus and the display in the embodiments of the present invention are described in the foregoing. An electrode configuration of a stereoscopic imaging apparatus in an embodiment of the present invention is described below in detail.

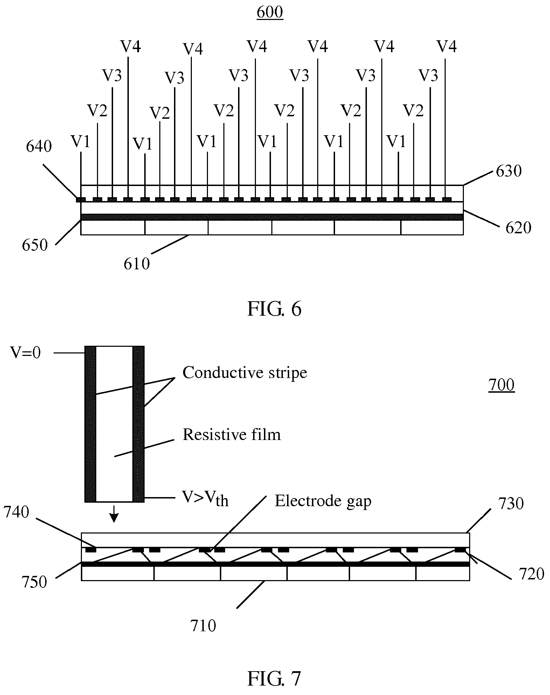

FIG. 6 is a schematic sectional diagram of a stereoscopic imaging apparatus 600 according to an embodiment of the present invention.

In this embodiment, for ease of description, only six electro-optic modulation units of an electro-optic modulation layer are shown. In each of the electro-optic modulation units, a continuous transparent conductive film (that is, a second electrode) is disposed on one surface (for example, a light-incoming surface) of the liquid crystal electro-optic modulation unit, four conductive stripes (first electrodes) are disposed on another surface (for example, a light-outgoing surface) of the liquid crystal electro-optic modulation unit, and an electric field is formed by receiving a common voltage on the transparent conductive film and receiving corresponding voltages on the four conductive stripes, so that the corresponding electro-optic modulation unit produces an effect of an off-axis cylindrical lens. In the entire electro-optic modulation layer, continuous transparent conductive films may form a whole, and each of the conductive stripes may span a column of pixel units.

Referring to FIG. 6, the stereoscopic imaging apparatus 600 includes a display panel 610, liquid crystals 620, a glass cover plate 630, first electrodes 640, and second electrodes 650. The first electrodes 640 are a series of conductive stripes, and these conductive stripes may be evenly distributed, or may be unevenly distributed. Five first electrodes may be disposed on each pixel unit, and an edge electrode of each pixel unit is also an edge electrode of an adjacent pixel. In this way, averagely four electrodes are actually arranged on each pixel unit, and four received voltages are V1, V2, V3, and V4. For example, V1, V2, V3, and V4 may be voltages of about 5 V, but this embodiment according to the present invention is not limited thereto. For example, voltages between 2.6 V and 21 V may be selected according to an actual requirement. The second electrodes 650 are continuous transparent conductive thin films, and are located between the display panel 610 and the liquid crystals 620. By adjusting an electrode voltage Vn, a phase distribution that satisfies a requirement can be produced on a liquid crystal corresponding to each pixel unit. Because a liquid crystal has a property of a tendency to smooth a discontinuous voltage, more than four voltage distributions are enough to produce a phase distribution that satisfies a requirement. A voltage received on a first electrode may switch between +Vn and •Vn at a very high frequency (for example, about 50 HZ), to keep a direct-current (DC) voltage stable. A size of each pixel unit may be set to be less than or equal to 75 •m.

FIG. 7 is a schematic diagram of a stereoscopic imaging apparatus 700 according to another embodiment of the present invention.

In this embodiment, for ease of description, only six electro-optic modulation units of an electro-optic modulation layer are shown. In each of the electro-optic modulation units, a continuous transparent conductive film (that is, a second electrode) is disposed on one surface (for example, a light-incoming surface) of the liquid crystal electro-optic modulation unit, a resistive film (a first electrode) connected between conductive stripes is disposed on another surface (for example, a light-outgoing surface) of the liquid crystal electro-optic modulation unit, and an electric field is formed by receiving a common voltage on the transparent conductive film and receiving corresponding voltages on the conductive stripes, so that the corresponding electro-optic modulation unit produces an effect of a lens having a linear phase. In the entire electro-optic modulation layer, continuous transparent conductive films may form a whole, and a resistive film connected between the conductive stripes may span a column of pixel units.

Referring to FIG. 7, the stereoscopic imaging apparatus 700 includes a display panel 710, liquid crystals 720, a glass cover plate 730, first electrodes 740, and second electrodes 750. The first electrode 740 may be formed by a resistive film connected between two conductive stripes. An electrode gap exists between first electrodes of adjacent pixel units. Two conductive stripes of each of the first electrodes receive different voltages V (for example, V = 0 and V > Vth), to form linearly distributed voltages on a resistive film. Specifically, the two conductive stripes may be ITO transparent conductive films. Voltages V = 0 and V > Vth are received on each of the two conductive stripes. Because a resistive film has a conductivity R, there is a linear voltage decrease on a resistive film connected between two conductive stripes, causing a liquid crystal to present a linear phase ramp, as shown by a fold line in FIG. 7.

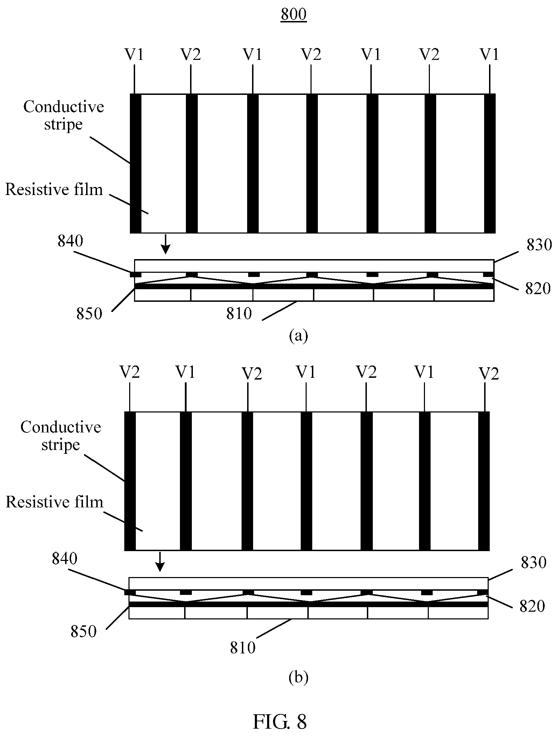

FIG. 8 is a schematic diagram of a stereoscopic imaging apparatus 800 according to another embodiment of the present invention. FIG. 8 is a schematic diagram of switching of the stereoscopic imaging apparatus in FIG. 8 between different states. The stereoscopic imaging apparatus 800 includes a display panel 810, liquid crystals 820, a glass cover plate 830, first electrodes 840, and second electrodes 850.

The embodiment in FIG. 8 is similar to the embodiment in FIG. 7 in that a first electrode 840 is also formed by a resistive film connected between two conductive stripes, but a difference is that in the embodiment in FIG. 8, a solution of reusing a conductive stripe is used, that is, adjacent electro-optic modulation units share one conductive stripe, and maximum resolution is implemented by controlling beams in time and space intervals. Specifically, each pixel unit has two conductive stripes, and a triangular phase delay distribution can be produced by receiving voltages V1 and V2 on the two conductive stripes, as shown by a fold line in FIG. 8. As shown in (a) in FIG. 8, in a first time period (for example, a first image frame) light rays passing through adjacent pixels deflect into two different directions (into left-eye and right-eye directions). If V1 and V2 are interchanged in a second image frame, the triangular phase distribution is shifted. The phase distribution causes light to deflect into a direction different from that of the previous frame. Therefore, different from a method in which light rays of all pixel units are deflected into the left-eye observation direction in the first frame and light rays of all the pixel units are deflected into the right-eye observation direction in the second frame, in this embodiment, in the first frame, light rays of selected pixel units of a first part are deflected into the left-eye observation direction, and light rays of selected pixel units of a second part are deflected into the right-eye observation direction, and then in a next frame, light rays of the selected pixel units of the first part are deflected into the right-eye observation direction, and light rays of the selected pixel units of the second part are deflected into the right-eye observation direction. Due to persistence of a human eye visual system, it can be observed that two pictures of one direction that differ in time appear to be one picture; therefore, picture resolution same as that in the embodiment in FIG. 7 can be obtained.

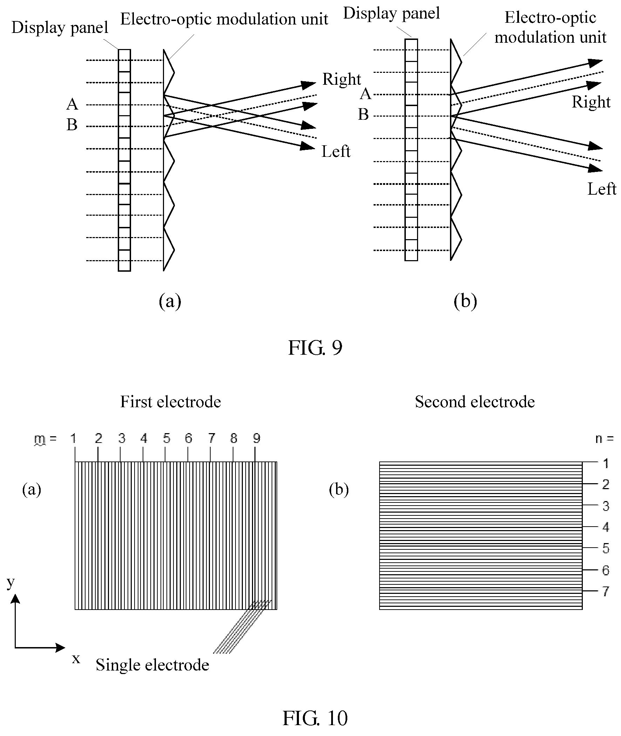

FIG. 9 is a schematic diagram of two display states of a stereoscopic imaging apparatus according to an embodiment of the present invention. (a) and (b) in FIG. 9 respectively show switching of optical behavior features of corresponding triangular phase modes in (a) and (b) in FIG. 8 between two different states. (a) in FIG. 9 describes the first state, that is, in the first time period, pixel unit A deflects a light ray into the left-eye observation direction, and pixel unit B deflects a light ray into the right-eye observation direction. (b) in FIG. 9 describes the second state, that is, in the second time period, the pixel units change phase modes, causing an interchange between the deflection directions, that is, pixel unit A deflects a light ray into the right-eye observation direction, and pixel unit B deflects a light ray into the left-eye observation direction.

FIG. 10 is a schematic diagram of an electrode configuration of a stereoscopic imaging apparatus according to another embodiment of the present invention.

In this embodiment, the electrode configuration of the stereoscopic imaging apparatus may include multiple first electrodes distributed on one side (for example, a light-outgoing surface) of a liquid crystal layer of the stereoscopic imaging apparatus and multiple second electrodes distributed on another side (a light-incoming surface) of the liquid crystal layer of the stereoscopic imaging apparatus, where the multiple first electrodes and the multiple second electrodes may be arranged orthogonally, that is, a longitudinal direction of the first electrodes and a longitudinal direction of the second electrodes form a 90 degree angle. This embodiment of the present invention is not limited thereto. For example, included angles between the first electrodes and the second electrodes may be less than 90 degree. A difference from the foregoing embodiment is that both the first electrodes and the second electrodes use multiple conductive stripes or include two conductive stripes and a resistive film connected between the two conductive stripes.

In this embodiment, when the stereoscopic imaging apparatus is in a first direction, the multiple first electrodes may receive voltages required for producing a lens effect, and the multiple second electrodes are used as common electrodes to receive a same reference voltage (for example, 0 V); and when the stereoscopic imaging apparatus is in a second direction after rotation, the multiple first electrodes are used as common electrodes to receive the same reference voltage, and the multiple second electrodes receive the voltages used for producing the lens effect, so that a user can still see a stereoscopic image after the stereoscopic imaging apparatus rotates. An example in which the first electrodes and the second electrodes are orthogonal is used below for description. It should be understood that the reference voltage may be greater than 0 V, for example, 0.5 V. When a reference voltage received on an electrode (for example, a first electrode or a second electrode) is, for example, V₀ V, another electrode (for example, a second electrode or a first electrode) corresponding to the electrode should receive a pure alternating voltage plus V₀ V.

Specifically, ITO transparent conductive film electrodes (which include a series of conductive stripes) may be disposed on both a top surface and a bottom surface of the liquid crystal layer. For example, for each pixel unit P(m, n), four electrodes are disposed on the top surface of the liquid crystal layer along a y direction, and four electrodes are disposed on the bottom surface of the liquid crystal layer along an x direction. Assuming that there are MxN pixel units in total, there are 4M electrodes in the x direction and 4N electrodes in the y direction. In addition, an interval between adjacent electrodes may be optimized, so that when a same potential is set for electrodes on a same plane, an almost smooth potential distribution is produced near these electrodes. For example, distances between electrodes located on a same liquid crystal plane of the liquid crystal layer may be set to be the same, or may be set to be less than a distance between two liquid crystal planes on which electrodes are located.

According to this embodiment of the present invention, when the stereoscopic display apparatus works, to point in a direction during displaying, all electrodes on a liquid crystal plane may receive a voltage of 0 V to serve as a ground plane or receive a specific voltage to serve as a reference plane, while electrodes on another liquid crystal plane receive voltages required for producing off-axis lens patterns (off-axis lens patterns). In this way, it can be ensured that an auto-stereoscopic display axis is in a corresponding direction. When detecting that the stereoscopic imaging apparatus rotates 90 degrees, the stereoscopic imaging apparatus may switch the auto-stereoscopic display axis to another direction by interchanging voltage settings on the two electrode planes.

A time division multiplexing method in this embodiment of the present invention is described below in detail by using a liquid crystal lens as an example.

To enable a user to see a stereoscopic image, an off-axis liquid crystal lens or a liquid crystal lens having a phase ramp may be switched quickly between different states.

For example, in a case in which there are two projection directions (Q = 2) and a refresh rate (refresh rate) f_{refresh} = 25 Hz, it is required that switching time (switching time) , < 20 ms, in a case in which f_{refresh} = 25 Hz and projection direction Q = 4, switching time , < 10 ms, and in a case in which projection direction Q = 8, switching time , < 5 msec, where switching time , = 1/(Q*f_{refresh}). It takes a specific amount of time for a liquid crystal to switch from one state to another state (for a traditional planar nematic liquid crystal molecule, switch-on time is about 2 ms, and relaxation time is about 100 ms). The switch-on time and the relaxation time are functions about a thickness of an optical cell (cell), a liquid crystal material, a received voltage, and a temperature. A method for reducing switch-on time and relaxation time is using an overdrive electrode (that is, receiving a high +ve or • ve voltage pulse), and a liquid crystal molecule can be forced to change into a desired state by using the overdrive electrode. Then, by producing display backlight in a pulsating manner, a residual transient switching effect can be avoided. An objective of doing this is to ensure that a light ray is not cast onto a liquid crystal lens array before a phase distribution of a liquid crystal becomes stable. This embodiment according to the present invention is not limited thereto, and another quick switching technology may also be used. For example, a configuration of a *f*-type optical cell (pi-cell) may be used, and switching time of the *f*-type optical cell is much less than that of a planar aligned (planar aligned) optical cell.

Therefore, when a solution of multiple users/multiple projection directions is implemented, switching time needs to be minimized. This can be implemented by reducing space between optical cells. Certainly, switching time may also be reduced by using a pi-cell or an overdrive voltage.

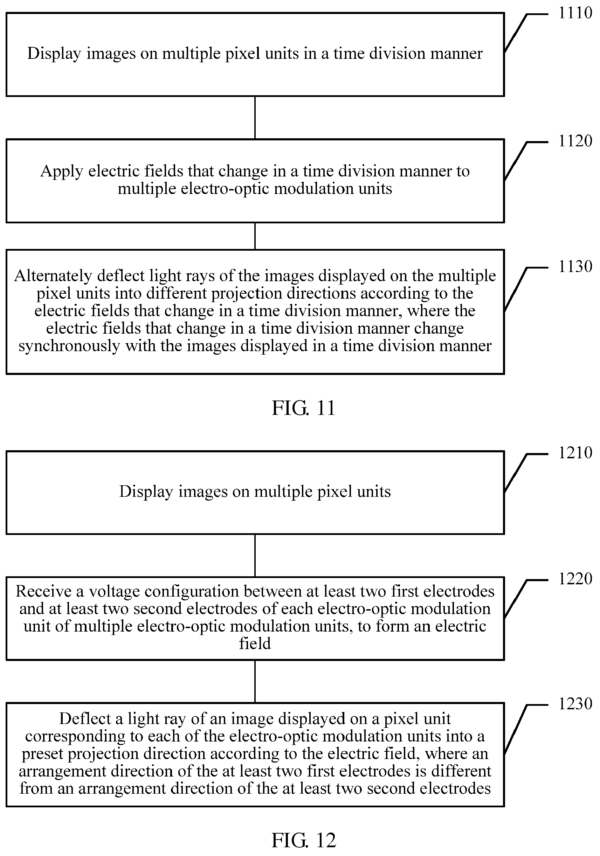

FIG. 11 is a schematic flowchart of a stereoscopic imaging method according to an embodiment of the present invention. The stereoscopic imaging method in FIG. 11 includes the following content:
1110: Display images on multiple pixel units in a time division multiplexing scheme.
1120: Apply electric fields that change in a time division multiplexing scheme to multiple electro-optic modulation units.
1130: Alternately deflect light rays of the images displayed on the multiple pixel units into different projection directions according to the electric fields that change in a time division multiplexing scheme, where the electric fields that change in a time division multiplexing scheme change synchronously with the images displayed in a time division multiplexing scheme.

According to this embodiment of the present invention, the multiple pixel units are in a one-to-one correspondence with the multiple electro-optic modulation units. In 1120, the electric field may be formed by receiving a voltage configuration between at least one first electrode and at least one second electrode layer of each pixel unit of the multiple pixel units.

According to this embodiment of the present invention, in 1120, at least two voltages may be received on each of at least two first electrodes of each electro-optic modulation unit of the multiple electro-optic modulation units, and a reference voltage may be received on the at least one second electrode.

According to this embodiment of the present invention, in 1120, multiple voltages may be received on each of multiple first electrodes of each electro-optic modulation unit of the multiple electro-optic modulation units, where at least two voltages of the multiple voltages are different, so that the multiple electro-optic modulation units produce a function of an off-axis lens under an effect of an electric field formed by the multiple voltages received on each of the multiple first electrodes and the reference voltage received on the at least one second electrode, to deflect a light ray into a preset projection direction.

According to this embodiment of the present invention, in 1120, two voltages may be received on each of two first electrodes connected to a resistive film of each electro-optic modulation unit of the multiple electro-optic modulation units, where the two voltages are different, so that each of the electro-optic modulation units produces a function of a lens having a linear phase tilt under an effect of an electric field formed by the two voltages received on each of the two first electrodes and the reference voltage received on the at least one second electrode, to deflect a light ray into a preset projection direction.

According to this embodiment of the present invention, in 1130, each electro-optic modulation unit of the multiple electro-optic modulation units may deflect a light ray of an image displayed on a pixel unit corresponding to each of the electro-optic modulation units into a first projection direction in a first time period according to an electric field formed by a first voltage configuration received between the at least two first electrodes and the at least one second electrode used as a common electrode; and each electro-optic modulation unit of the multiple electro-optic modulation units may deflect a light ray of an image displayed on the pixel unit corresponding to each of the electro-optic modulation units into a second projection direction in a second time period according to an electric field formed by a second voltage configuration received between the at least two first electrodes and the at least one second electrode used as a common electrode, where the first voltage configuration is different from the second voltage configuration, so that an electric field that changes in a time division multiplexing scheme is formed in the first time period and the second time period.

According to this embodiment of the present invention, in 1120, two voltages may be received on each of two first electrodes connected to a resistive film of each electro-optic modulation unit of the multiple electro-optic modulation units, where the two voltages are different, and each of the electro-optic modulation units shares one first electrode with an adjacent electro-optic modulation unit, so that each of the electro-optic modulation units produces a function of a lens having a linear phase tilt under an effect of an electric field formed by the two voltages received on each of the two first electrodes and the reference voltage received on the at least one second electrode, to deflect a light ray into a preset projection direction.

According to this embodiment of the present invention, in 1130, each electro-optic modulation unit of the multiple electro-optic modulation units may deflect a light ray of an image displayed on a pixel unit corresponding to each of the electro-optic modulation units into a first projection direction in a first time period according to a first voltage configuration received between the two first electrodes and the at least one second electrode; each electro-optic modulation unit of the multiple electro-optic modulation units may deflect a light ray of an image displayed on the pixel unit corresponding to each of the electro-optic modulation units into a second projection direction in a second time period according to a second voltage configuration received between the two first electrodes and the at least one second electrode; the adjacent electro-optic modulation unit may deflect a light ray of an image displayed on a pixel unit corresponding to the adjacent electro-optic modulation unit into the second projection direction in the first time period according to the second voltage configuration received between two first electrodes of the adjacent electro-optic modulation unit and the at least one second electrode; and the adjacent electro-optic modulation unit may deflect a light ray of an image displayed on the pixel unit corresponding to the adjacent electro-optic modulation unit into the first projection direction in the second time period according to the first voltage configuration received between the two first electrodes of the adjacent electro-optic modulation unit and the at least one second electrode, where the first voltage configuration is different from the second voltage configuration, so that an electric field that changes in a time division multiplexing scheme is formed in the first time period and the second time period.

According to this embodiment of the present invention, an arrangement direction of at least two second electrodes of each electro-optic modulation unit of the multiple electro-optic modulation units is different from an arrangement direction of the at least two first electrodes. In 1120, when the stereoscopic imaging apparatus is in a first direction, the at least two voltages may be received on each of the at least two first electrodes, and the reference voltage may be received on the at least two second electrodes used as common electrodes, where the stereoscopic imaging method in FIG. 11 further includes: when the stereoscopic imaging apparatus is in a second direction, receiving the reference voltage on the at least two first electrodes used as common electrodes, and receiving the at least two voltages on each of the at least two second electrodes.

According to this embodiment of the present invention, in 1120, multiple voltages may be received on each of multiple second electrodes of each electro-optic modulation unit of the multiple electro-optic modulation units, where at least two voltages of the multiple voltages are different, so that each of the electro-optic modulation units produces a function of an off-axis lens under an effect of an electric field formed by the multiple voltages received on each of the multiple second electrodes and the reference voltage received on the at least two first electrodes used as common electrodes, to deflect a light ray into a preset projection direction.

According to this embodiment of the present invention, in 1120, two voltages may be received on each of two second electrodes connected to a resistive film of each electro-optic modulation unit of the multiple electro-optic modulation units, where the two voltages are different, so that each of the electro-optic modulation units produces a function of a lens having a linear phase tilt under an effect of an electric field formed by the two voltages received on each of the two second electrodes and the reference voltage received on the at least two first electrodes used as common electrodes.

According to this embodiment of the present invention, in 1130, each electro-optic modulation unit of the multiple electro-optic modulation units may deflect a light ray of an image displayed on a pixel unit corresponding to each of the electro-optic modulation units into a third projection direction in a third time period according to a third voltage configuration received between the at least two first electrodes used as common electrodes and the at least two second electrodes; and each electro-optic modulation unit of the multiple electro-optic modulation units may deflect a light ray of an image displayed on the pixel unit corresponding to each of the electro-optic modulation units into a fourth projection direction in a fourth time period according to a fourth voltage configuration received between the at least two first electrodes used as common electrodes and the at least two second electrodes, where the third voltage configuration is different from the fourth voltage configuration, so that an electric field that changes in a time division multiplexing scheme is formed in the third time period and the fourth time period.

According to this embodiment of the present invention, in 1120, two voltages may be received on each of two second electrodes connected to a resistive film of each electro-optic modulation unit of the multiple electro-optic modulation units, where the two voltages are different, and each of the electro-optic modulation units shares one second electrode with an adjacent electro-optic modulation unit, so that each of the electro-optic modulation units produces a function of a lens having a linear phase tilt under an effect of an electric field formed by the two voltages received on each of the two second electrodes and the reference voltage received on the at least two first electrodes used as common electrodes, to deflect a light ray into a preset projection direction.

According to this embodiment of the present invention, in 1130, each electro-optic modulation unit of the multiple electro-optic modulation units may deflect a light ray of an image displayed on a pixel unit corresponding to each of the electro-optic modulation units into a third projection direction in a third time period according to a third voltage configuration received between the two first electrodes and the at least two second electrodes used as common electrodes; each electro-optic modulation unit of the multiple electro-optic modulation units may deflect a light ray of an image displayed on the pixel unit corresponding to each of the electro-optic modulation units into a fourth projection direction in a fourth time period according to a fourth voltage configuration received between the two first electrodes used as common electrodes and the two second electrodes; the adjacent electro-optic modulation unit may deflect a light ray of an image displayed on a pixel unit corresponding to the adjacent electro-optic modulation unit into the fourth projection direction in the third time period according to the fourth voltage configuration received between two first electrodes used as common electrodes and at least two second electrodes of the adjacent electro-optic modulation unit; and the adjacent electro-optic modulation unit may deflect a light ray of an image displayed on the pixel unit corresponding to the adjacent electro-optic modulation unit into the third projection direction in the fourth time period according to the fourth voltage configuration received between the two second electrodes used as common electrodes and the two first electrodes of the adjacent electro-optic modulation unit, where the third voltage configuration is different from the fourth voltage configuration, so that an electric field that changes in a time division multiplexing scheme is formed in the third time period and the fourth time period.

FIG. 12 is a schematic flowchart of a stereoscopic imaging method according to an embodiment of the present invention. The stereoscopic imaging method in FIG. 12 includes the following content:
1210: Display images on multiple pixel units.
1220: Receive a voltage configuration between at least two first electrodes and at least two second electrodes of each electro-optic modulation unit of multiple electro-optic modulation units, to form an electric field.
1230: Deflect a light ray of an image displayed on a pixel unit corresponding to each of the electro-optic modulation units into a preset projection direction according to the electric field, where an arrangement direction of the at least two first electrodes is different from an arrangement direction of the at least two second electrodes.

In 1220, when the stereoscopic imaging apparatus is in a first direction, at least two voltages may be received on each of the at least two first electrodes, and the at least two second electrodes may be used as common electrodes to receive a reference voltage; and when the stereoscopic imaging apparatus is in a second direction, the at least two first electrodes may be used as common electrodes to receive the reference voltage, and the at least two voltages may be received on each of the at least two second electrodes.

In 1220, multiple voltages may be received on each of multiple first electrodes, where at least two voltages of the multiple voltages are different, so that each of the electro-optic modulation units produces a function of an off-axis lens under an effect of an electric field formed by the multiple voltages received on each of the multiple first electrodes and the reference voltage received on the at least two second electrodes used as common electrodes; and multiple voltages may be received on each of multiple second electrodes, where at least two voltages of the multiple voltages are different, so that each of the electro-optic modulation units produces a function of an off-axis lens under an effect of an electric field formed by the multiple voltages received on each of the multiple second electrodes and the reference voltage received on the at least two first electrodes used as common electrodes, to deflect a light ray into a preset projection direction.

In 1220, two voltages may be received on each of two first electrodes connected to a resistive film, where the two voltages are different, so that each of the electro-optic modulation units produces a function of a lens having a linear phase tilt under an effect of an electric field formed by the two voltages received on each of the two first electrodes and the reference voltage received on the at least two second electrodes used as common electrodes; and two voltages may be received on each of two second electrodes connected to a resistive film, where the two voltages are different, so that each of the electro-optic modulation units produces a function of a lens having a linear phase tilt under an effect of an electric field formed by the two voltages received on each of the two second electrodes and the reference voltage received on the at least two first electrodes used as common electrodes, to deflect a light ray into a preset projection direction.

In 1220, two voltages may be received on each of two first electrodes connected to a resistive film, where the two voltages are different, and each of the electro-optic modulation units shares one first electrode with an adjacent electro-optic modulation unit, so that each of the electro-optic modulation units produces a function of a lens having a linear phase tilt under an effect of an electric field formed by the two voltages received on each of the two first electrodes and the reference voltage received on the at least two second electrodes used as common electrodes; and two voltages may be received on each of two second electrodes connected to a resistive film, where the two voltages are different, and each of the electro-optic modulation units shares one second electrode with an adjacent electro-optic modulation unit, so that each of the electro-optic modulation units produces a function of a lens having a linear phase tilt under an effect of an electric field formed by the two voltages received on each of the two second electrodes and the reference voltage received on the at least two first electrodes used as common electrodes, to deflect a light ray into a preset projection direction.

According to this embodiment of the present invention, the multiple electro-optic modulation units are in a one-to-one correspondence with the multiple pixel units. In 1210, the images of different projection directions may be displayed on the multiple pixel units in a time division multiplexing scheme; and in 1220, a voltage configuration that changes in a time division multiplexing scheme may be applied between the at least two first electrodes and the at least two second electrodes of each electro-optic modulation unit of the multiple electro-optic modulation units, to form an electric field that changes in a time division multiplexing scheme.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A stereoscopic imaging apparatus, comprising:
a display panel, which comprises multiple pixel units, and is configured to display images in a time division multiplexing scheme; and
an electro-optic modulation layer, which comprises multiple electro-optic modulation units respectively arranged at positions corresponding to the multiple pixel units, and is configured to alternately deflect light rays of the images displayed on the multiple pixel units into different projection directions according to applied electric fields that change in a time division multiplexing scheme, wherein the electric fields that change in a time division multiplexing scheme change synchronously with the images displayed in a time division multiplexing scheme.

2. The stereoscopic imaging apparatus according to claim 1, wherein the multiple electro-optic modulation units are in a one-to-one correspondence with the multiple pixel units, and the electro-optic modulation layer comprises:
an electro-optic modulation medium layer, wherein the electro modulation medium layer comprises electro-optic modulation mediums and has a light-outgoing surface and a light-incoming surface;
a first electrode layer, comprising electrodes located on the light-outgoing surface of the electro-optic modulation medium layer; and
a second electrode layer, comprising electrodes located on the light-incoming surface of the electro-optic modulation medium layer, wherein
each electro-optic modulation unit of the multiple electro-optic modulation units comprises an electro-optic modulation medium located in the electro-optic modulation medium layer, at least one first electrode located in the first electrode layer, and at least one second electrode located in the second electrode layer, wherein the electro-optic modulation medium deflects a light ray of an image displayed on a pixel unit corresponding to the electro-optic modulation medium into a preset projection direction according to an electric field formed by a voltage configuration applied between the at least one first electrode and the at least one second electrode.

3. The stereoscopic imaging apparatus according to claim 2, wherein each electro-optic modulation unit of the multiple electro-optic modulation units comprises: at least two first electrodes, each configured to receive at least two voltages, and the at least one second electrode is used as a common electrode and is configured to receive a reference voltage.

4. The stereoscopic imaging apparatus according to claim 2 or 3, wherein each electro-optic modulation unit of the multiple electro-optic modulation units comprises multiple first electrodes, each configured to receive multiple voltages, wherein at least two voltages of the multiple voltages are different, so that the electro-optic modulation medium produces a function of an off-axis lens under an effect of an electric field formed by the multiple voltages received on each of the multiple first electrodes and the reference voltage received on the at least one second electrode used as a common electrode, to deflect a light ray into a preset projection direction.

5. The stereoscopic imaging apparatus according to claim 3, wherein each electro-optic modulation unit of the multiple electro-optic modulation units comprises two first electrodes and a resistive film connected between the two first electrodes, wherein each of the two first electrodes is configured to receive two voltages, wherein the two voltages are different, so that the electro-optic modulation medium produces a function of a lens having a linear phase tilt under an effect of an electric field formed by the two voltages received on each of the two first electrodes and the reference voltage received on the at least one second electrode used as a common electrode, to deflect a light ray into a preset projection direction.

6. The stereoscopic imaging apparatus according to any one of claims 3 to 5, wherein each electro-optic modulation unit of the multiple electro-optic modulation units deflects a light ray of an image displayed on a pixel unit corresponding to the electro-optic modulation medium into a first projection direction in a first time period according to an electric field formed by a first voltage configuration received between the at least two first electrodes and the at least one second electrode used as a common electrode, and deflects a light ray of an image displayed on the pixel unit corresponding to the electro-optic modulation medium into the second projection direction in a second time period according to an electric field formed by a second voltage configuration received between the at least two first electrodes and the at least one second electrode used as a common electrode, wherein the first voltage configuration is different from the second voltage configuration, so that an electric field that changes in a time division multiplexing scheme is formed in the first time period and the second time period.

7. The stereoscopic imaging apparatus according to claim 3, wherein each electro-optic modulation unit of the multiple electro-optic modulation units comprises two first electrodes and a resistive film connected between the two first electrodes, wherein each of the two first electrodes is configured to receive two voltages, wherein the two voltages are different, and each of the electro-optic modulation units shares one first electrode with an adjacent electro-optic modulation unit, so that the electro-optic modulation medium produces a function of a lens having a linear phase tilt under an effect of an electric field formed by the two voltages received on each of the two first electrodes and the reference voltage received on the at least one second electrode used as a common electrode, to deflect a light ray into a preset projection direction.

8. The stereoscopic imaging apparatus according to claim 7, wherein each electro-optic modulation unit of the multiple electro-optic modulation units deflects a light ray of an image displayed on a pixel unit corresponding to the electro-optic modulation medium into a first projection direction in a first time period according to a first voltage configuration received between the two first electrodes and the at least one second electrode used as a common electrode, and deflects a light ray of an image displayed on the pixel unit corresponding to the electro-optic modulation medium into a second projection direction in a second time period according to a second voltage configuration received between the two first electrodes and the at least one second electrode used as a common electrode, and the adjacent electro-optic modulation unit deflects a light ray of an image displayed on a pixel unit corresponding to an electro-optic modulation medium of the adjacent electro-optic modulation unit into the second projection direction in the first time period according to the second voltage configuration received between two first electrodes of the adjacent electro-optic modulation unit and the at least one second electrode used as a common electrode, and deflects a light ray of an image displayed on the pixel unit corresponding to the electro-optic modulation medium of the adjacent electro-optic modulation unit into the first projection direction in the second time period according to the first voltage configuration received between the two first electrodes of the adjacent electro-optic modulation unit and the at least one second electrode used as a common electrode, wherein the first voltage configuration is different from the second voltage configuration, so that an electric field that changes in a time division multiplexing scheme is formed in the first time period and the second time period.

9. The stereoscopic imaging apparatus according to any one of claims 3 to 8, wherein each electro-optic modulation unit of the multiple electro-optic modulation units comprises at least two second electrodes, wherein an arrangement direction of the at least two second electrodes is different from an arrangement direction of the at least two first electrodes; when the stereoscopic imaging apparatus is in a first direction, each of the at least two first electrodes receives the at least two voltages, and the at least two second electrodes are used as common electrodes to receive the reference voltage; and when the stereoscopic imaging apparatus is in a second direction, the at least two first electrodes are used as common electrodes to receive the reference voltage, and each of the at least two second electrodes receives the at least two voltages.

10. The stereoscopic imaging apparatus according to claim 9, wherein each electro-optic modulation unit of the multiple electro-optic modulation units comprises multiple second electrodes, each configured to receive multiple voltages, wherein at least two voltages of the multiple voltages are different, so that the electro-optic modulation medium produces a function of an off-axis lens under an effect of an electric field formed by the multiple voltages received on each of the multiple second electrodes and the reference voltage received on the at least two first electrodes used as common electrodes, to deflect a light ray into a preset projection direction.

11. The stereoscopic imaging apparatus according to claim 9, wherein each electro-optic modulation unit of the multiple electro-optic modulation units comprises two second electrodes and a resistive film connected between the two second electrodes, wherein each of the two second electrodes is configured to receive two voltages, wherein the two voltages are different, so that the electro-optic modulation medium produces a function of a lens having a linear phase tilt under an effect of an electric field formed by the two voltages received on each of the two second electrodes and the reference voltage received on the at least two first electrodes used as common electrodes, to deflect a light ray into a preset projection direction.

12. The stereoscopic imaging apparatus according to any one of claims 9 to 11, wherein each electro-optic modulation unit of the multiple electro-optic modulation units deflects a light ray of an image displayed on a pixel unit corresponding to the electro-optic modulation medium into a third projection direction in a third time period according to a third voltage configuration received between the at least two first electrodes used as common electrodes and the at least two second electrodes, and deflects a light ray of an image displayed on the pixel unit corresponding to the electro-optic modulation medium into a fourth projection direction in a fourth time period according to a fourth voltage configuration received between the at least two first electrodes used as common electrodes and the at least two second electrodes, wherein the third voltage configuration is different from the fourth voltage configuration, so that an electric field that changes in a time division multiplexing scheme is formed in the third time period and the fourth time period.

13. The stereoscopic imaging apparatus according to claim 9, wherein each electro-optic modulation unit of the multiple electro-optic modulation units comprises two second electrodes and a resistive film connected between the two second electrodes, wherein each of the two second electrodes is configured to receive two voltages, wherein the two voltages are different, and each of the electro-optic modulation units shares one second electrode with an adjacent electro-optic modulation unit, so that the electro-optic modulation medium produces a function of a lens having a linear phase tilt under an effect of an electric field formed by the two voltages received on each of the two second electrodes and the reference voltage received on the at least two first electrodes used as common electrodes, to deflect a light ray into a preset projection direction.

14. The stereoscopic imaging apparatus according to claim 13, wherein each electro-optic modulation unit of the multiple electro-optic modulation units deflects a light ray of an image displayed on a pixel unit corresponding to the electro-optic modulation medium into a third projection direction in a third time period according to a third voltage configuration received between the two first electrodes and the at least two second electrodes used as common electrodes, and deflects a light ray of an image displayed on the pixel unit corresponding to the electro-optic modulation medium into a fourth projection direction in a fourth time period according to a fourth voltage configuration received between the two first electrodes used as common electrodes and the two second electrodes, and the adjacent electro-optic modulation unit deflects a light ray of an image displayed on a pixel unit corresponding to an electro-optic modulation medium of the adjacent electro-optic modulation unit into the fourth projection direction in the third time period according to the fourth voltage configuration received between two first electrodes used as common electrodes and at least two second electrodes of the adjacent electro-optic modulation unit, and deflects a light ray of an image displayed on the pixel unit corresponding to the electro-optic modulation medium of the adjacent electro-optic modulation unit into the third projection direction in the fourth time period according to the third voltage configuration received between the two second electrodes used as common electrodes and the two first electrodes of the adjacent electro-optic modulation unit, wherein the third voltage configuration is different from the fourth voltage configuration, so that an electric field that changes in a time division multiplexing scheme is formed in the third time period and the fourth time period.

15. The stereoscopic imaging apparatus according to any one of claims 3 to 8, wherein the at least one second electrode comprises a continuous indium tin oxide ITO transparent conductive film.

16. The stereoscopic imaging apparatus according to any one of claims 2 to 15, wherein the electro-optic modulation medium comprises a liquid crystal or a lithium niobate crystal.

17. The stereoscopic imaging apparatus according to any one of claims 2 to 16, wherein a width of each of the electro-optic modulation units is less than or equal to 75 •m.

18. The stereoscopic imaging apparatus according to any one of claims 2 to 17, wherein within a unit length in at least one direction of the stereoscopic imaging apparatus, a quantity of electrodes comprised in the electro-optic modulation units is greater than a quantity of pixel units.

19. The stereoscopic imaging apparatus according to any one of claims 2 to 18, wherein in a case in which no electric field is applied, the electro-optic modulation layer causes the display panel to present a two-dimensional image.

20. A stereoscopic imaging apparatus, comprising:
a display panel, which comprises multiple pixel units, and is configured to display images; and
an electro-optic modulation layer, comprising multiple electro-optic modulation units, wherein each electro-optic modulation unit of the multiple electro-optic modulation units comprises an electro-optic modulation medium, at least two first electrodes located on a light-outgoing surface of the electro-optic modulation medium, and at least two second electrodes located on a light-incoming surface of the electro-optic modulation medium layer, wherein the electro-optic modulation medium deflects a light ray of an image displayed on a pixel unit corresponding to the electro-optic modulation medium into a preset projection direction according to an electric field formed by a voltage configuration received between the at least two first electrodes and the at least two second electrodes, and an arrangement direction of the at least two first electrodes is different from an arrangement direction of the at least two second electrodes.

21. The stereoscopic imaging apparatus according to claim 20, wherein when the stereoscopic imaging apparatus is in a first direction, each of the at least two first electrodes receives the at least two voltages, and when the stereoscopic imaging apparatus is in a second direction, the at least two first electrodes are used as common electrodes to receive the reference voltage; and when the stereoscopic imaging apparatus is in the first direction, the at least two second electrodes are used as common electrodes to receive the reference voltage, and when the stereoscopic imaging apparatus is in the second direction, each of the at least two second electrodes receives the at least two voltages.

22. The stereoscopic imaging apparatus according to claim 21, wherein each electro-optic modulation unit of the multiple electro-optic modulation units comprises multiple first electrodes, each configured to receive multiple voltages, wherein at least two voltages of the multiple voltages are different, so that the electro-optic modulation medium produces a function of an off-axis lens under an effect of an electric field formed by the multiple voltages received on each of the multiple first electrodes and the reference voltage received on the at least two second electrodes used as common electrodes, to deflect a light ray into a preset projection direction; and
each electro-optic modulation unit of the multiple electro-optic modulation units comprises multiple second electrodes, each configured to receive multiple voltages, wherein at least two voltages of the multiple voltages are different, so that the electro-optic modulation medium produces a function of an off-axis lens under an effect of an electric field formed by the multiple voltages received on each of the multiple second electrodes and the reference voltage received on the at least two first electrodes used as common electrodes, to deflect a light ray into a preset projection direction.

23. The stereoscopic imaging apparatus according to claim 21, wherein each electro-optic modulation unit of the multiple electro-optic modulation units comprises two first electrodes and a resistive film connected between the two first electrodes, wherein each of the two first electrodes is configured to receive two voltages, wherein the two voltages are different, so that the electro-optic modulation medium produces a function of a lens having a linear phase tilt under an effect of an electric field formed by the two voltages received on each of the two first electrodes and the reference voltage received on the common electrodes, to deflect a light ray into a preset projection direction; and
each electro-optic modulation unit of the multiple electro-optic modulation units comprises two second electrodes and a resistive film connected between the two second electrodes, wherein each of the two second electrodes comprised in the at least two second electrodes is configured to receive two voltages, wherein the two voltages are different, so that the electro-optic modulation medium produces a function of a lens having a linear phase tilt under an effect of an electric field formed by the two voltages received on each of the two second electrodes and the reference voltage received on the at least two first electrodes used as common electrodes, to deflect a light ray into a preset projection direction.

24. The stereoscopic imaging apparatus according to claim 21, wherein each electro-optic modulation unit of the multiple electro-optic modulation units comprises two first electrodes and a resistive film connected between the two first electrodes, wherein each of the two first electrodes is configured to receive two voltages, wherein the two voltages are different, and each of the electro-optic modulation units shares one first electrode with an adjacent electro-optic modulation unit, so that the electro-optic modulation medium produces a function of a lens having a linear phase tilt under an effect of an electric field formed by the two voltages received on each of the two first electrodes and the reference voltage received on the at least two second electrodes used as common electrodes, to deflect a light ray into a preset projection direction; and
each electro-optic modulation unit of the multiple electro-optic modulation units comprises two second electrodes and a resistive film connected between the two second electrodes, wherein each of the two second electrodes is configured to receive two voltages, wherein the two voltages are different, and each of the electro-optic modulation units shares one second electrode with an adjacent electro-optic modulation unit, so that the electro-optic modulation medium produces a function of a lens having a linear phase tilt under an effect of an electric field formed by the two voltages received on each of the two second electrodes and the reference voltage received on the at least two second electrodes used as common electrodes, to deflect a light ray into a preset projection direction.

25. The stereoscopic imaging apparatus according to any one of claims 20 to 24, wherein the display panel displays the images in a time division multiplexing scheme, and the multiple electro-optic modulation units alternately deflect light rays of the images displayed on the multiple pixel units into the different projection directions according to electric fields that change in a time division multiplexing scheme and are formed by received voltage configurations, wherein the multiple electro-optic modulation units are in a one-to-one correspondence with the multiple pixel units, and the electric fields that change in a time division multiplexing scheme change synchronously with the images displayed in a time division multiplexing scheme.

26. A display, comprising:
the stereoscopic imaging apparatus according to claims 1 to 25;
a backlight layer, which overlaps an electro-optic modulation layer of the stereoscopic imaging apparatus, and is configured to emit backlight; and
a control module, configured to control a display panel of the stereoscopic imaging apparatus to display images in a time division multiplexing scheme, and control the electro-optic modulation layer of the stereoscopic imaging apparatus to alternately deflect, according to applied electric fields that change in a time division multiplexing scheme, light rays of the images displayed on the display panel into the different projection directions.

27. The display according to claim 26, wherein the control module comprises:
a direction calculation submodule, configured to calculate projection directions of the images according to information fed back by a sensor;
a voltage calculation submodule, configured to calculate voltage configurations corresponding to the projection directions according to the projection directions;
a display control submodule, configured to control, according to the projection directions, the display panel of the stereoscopic imaging apparatus to display the images corresponding to the projection directions in a time division multiplexing scheme; and
a voltage control submodule, configured to control, according to the voltage configurations, the electric fields that change in a time division multiplexing scheme and are applied to the electro-optic modulation layer of the stereoscopic imaging apparatus, to control the electro-optic modulation layer of the stereoscopic imaging apparatus to alternately deflect the light rays of the images into the different projection directions.

28. The display according to claim 27, wherein the information fed back by the sensor comprises at least one of the following: human eye position information, gyroscope information, acceleration information, and temperature information.

29. A stereoscopic imaging method, comprising:
displaying images on multiple pixel units in a time division multiplexing scheme;
applying electric fields that change in a time division multiplexing scheme to multiple electro-optic modulation units; and
alternately deflecting light rays of the images displayed on the multiple pixel units into the different projection directions according to the electric fields that change in a time division multiplexing scheme, wherein the electric fields that change in a time division multiplexing scheme change synchronously with the images displayed in a time division multiplexing scheme.

30. The stereoscopic imaging method according to claim 29, wherein the multiple pixel units are in a one-to-one correspondence with the multiple electro-optic modulation units, and the applying electric fields that change in a time division multiplexing scheme to multiple electro-optic modulation units comprises:
receiving a voltage configuration between at least one first electrode and at least one second electrode layer of each pixel unit of the multiple pixel units, to form an electric field.

31. The stereoscopic imaging method according to claim 30, wherein the receiving a voltage configuration between at least one first electrode and at least one second electrode layer of each pixel unit of the multiple pixel units, to form an electric field comprises:
receiving at least two voltages on each of at least two first electrodes of each electro-optic modulation unit of the multiple electro-optic modulation units, and receiving a reference voltage on the at least one second electrode.

32. The stereoscopic imaging method according to claim 31, wherein the receiving at least two voltages on each of at least two first electrodes of each electro-optic modulation unit of the multiple electro-optic modulation units, and receiving a reference voltage on the at least one second electrode comprises:
receiving multiple voltages on each of multiple first electrodes of each electro-optic modulation unit of the multiple electro-optic modulation units, wherein at least two voltages of the multiple voltages are different, so that the multiple electro-optic modulation units produce a function of an off-axis lens under an effect of an electric field formed by the multiple voltages received on each of the multiple first electrodes and the reference voltage received on the at least one second electrode, to deflect a light ray into a preset projection direction.

33. The stereoscopic imaging method according to claim 31, wherein the receiving at least two voltages on each of at least two first electrodes of each electro-optic modulation unit of the multiple electro-optic modulation units, and receiving a reference voltage on the at least one second electrode comprises:
receiving two voltages on each of two first electrodes connected to a resistive film of each electro-optic modulation unit of the multiple electro-optic modulation units, wherein the two voltages are different, so that each of the electro-optic modulation units produces a function of a lens having a linear phase tilt under an effect of an electric field formed by the two voltages received on each of the two first electrodes and the reference voltage received on the at least one second electrode, to deflect a light ray into a preset projection direction.

34. The stereoscopic imaging method according to any one of claims 31 to 33, wherein the alternately deflecting light rays of the images displayed on the multiple pixel units into the different projection directions according to the electric fields that change in a time division multiplexing scheme comprises:
deflecting, by each electro-optic modulation unit of the multiple electro-optic modulation units, a light ray of an image displayed on a pixel unit corresponding to each of the electro-optic modulation units into a first projection direction in a first time period according to an electric field formed by a first voltage configuration received between the at least two first electrodes and the at least one second electrode used as a common electrode; and
deflecting, by each electro-optic modulation unit of the multiple electro-optic modulation units, a light ray of an image displayed on the pixel unit corresponding to each of the electro-optic modulation units into a second projection direction in a second time period according to an electric field formed by a second voltage configuration received between the at least two first electrodes and the at least one second electrode used as a common electrode, wherein the first voltage configuration is different from the second voltage configuration, so that an electric field that changes in a time division multiplexing scheme is formed in the first time period and the second time period.

35. The stereoscopic imaging method according to claim 31, wherein the receiving at least two voltages on each of at least two first electrodes of each electro-optic modulation unit of the multiple electro-optic modulation units, and receiving a reference voltage on the at least one second electrode comprises:
receiving two voltages on each of two first electrodes connected to a resistive film of each electro-optic modulation unit of the multiple electro-optic modulation units, wherein the two voltages are different, and each of the electro-optic modulation units shares one first electrode with an adjacent electro-optic modulation unit, so that each of the electro-optic modulation units produces a function of a lens having a linear phase tilt under an effect of an electric field formed by the two voltages received on each of the two first electrodes and the reference voltage received on the at least one second electrode, to deflect a light ray into a preset projection direction.

36. The stereoscopic imaging method according to claim 35, wherein the alternately deflecting light rays of the images displayed on the multiple pixel units into the different projection directions according to the electric fields that change in a time division multiplexing scheme comprises:
deflecting, by each electro-optic modulation unit of the multiple electro-optic modulation units, a light ray of an image displayed on a pixel unit corresponding to each of the electro-optic modulation units into a first projection direction in a first time period according to a first voltage configuration received between the two first electrodes and the at least one second electrode;
deflecting, by each electro-optic modulation unit of the multiple electro-optic modulation units, a light ray of an image displayed on the pixel unit corresponding to each of the electro-optic modulation units into a second projection direction in a second time period according to a second voltage configuration received between the two first electrodes and the at least one second electrode;
deflecting, by the adjacent electro-optic modulation unit, a light ray of an image displayed on a pixel unit corresponding to the adjacent electro-optic modulation unit into the second projection direction in the first time period according to the second voltage configuration received between two first electrodes of the adjacent electro-optic modulation unit and the at least one second electrode; and
deflecting, by the adjacent electro-optic modulation unit, a light ray of an image displayed on the pixel unit corresponding to the adjacent electro-optic modulation unit into the first projection direction in the second time period according to the first voltage configuration received between the two first electrodes of the adjacent electro-optic modulation unit and the at least one second electrode, wherein the first voltage configuration is different from the second voltage configuration, so that an electric field that changes in a time division multiplexing scheme is formed in the first time period and the second time period.

37. The stereoscopic imaging method according to any one of claims 31 to 36, wherein an arrangement direction of at least two second electrodes of each electro-optic modulation unit of the multiple electro-optic modulation units is different from an arrangement direction of the at least two first electrodes, and the receiving a voltage configuration between at least one first electrode and at least one second electrode layer of each pixel unit of the multiple pixel units, to form an electric field comprises:
when the stereoscopic imaging apparatus is in a first direction, receiving the at least two voltages on each of the at least two first electrodes, and receiving the reference voltage on the at least two second electrodes used as common electrodes, wherein the stereoscopic imaging method further comprises:
when the stereoscopic imaging apparatus is in a second direction, receiving the reference voltage on the at least two first electrodes used as common electrodes, and receiving the at least two voltages on each of the at least two second electrodes.

38. The stereoscopic imaging method according to claim 37, wherein the receiving the at least two voltages on each of the at least two second electrodes comprises:
receiving multiple voltages on each of multiple second electrodes of each electro-optic modulation unit of the multiple electro-optic modulation units, wherein at least two voltages of the multiple voltages are different, so that each of the electro-optic modulation units produces a function of an off-axis lens under an effect of an electric field formed by the multiple voltages received on each of the multiple second electrodes and the reference voltage received on the at least two first electrodes used as common electrodes, to deflect a light ray into a preset projection direction.

39. The stereoscopic imaging method according to claim 37, wherein the receiving the at least two voltages on each of the at least two second electrodes comprises:
receiving two voltages on each of two second electrodes connected to a resistive film of each electro-optic modulation unit of the multiple electro-optic modulation units, wherein the two voltages are different, so that each of the electro-optic modulation units produces a function of a lens having a linear phase tilt under an effect of an electric field formed by the two voltages received on each of the two second electrodes and the reference voltage received on the at least two first electrodes used as common electrodes, to deflect a light ray into a preset projection direction.

40. The stereoscopic imaging method according to any one of claims 37 to 39, wherein:
each electro-optic modulation unit of the multiple electro-optic modulation units deflects a light ray of an image displayed on a pixel unit corresponding to each of the electro-optic modulation units into a third projection direction in a third time period according to a third voltage configuration received between the at least two first electrodes used as common electrodes and the at least two second electrodes; and
each electro-optic modulation unit of the multiple electro-optic modulation units deflects a light ray of an image displayed on the pixel unit corresponding to each of the electro-optic modulation units into a fourth projection direction in a fourth time period according to a fourth voltage configuration received between the at least two first electrodes used as common electrodes and the at least two second electrodes, wherein the third voltage configuration is different from the fourth voltage configuration, so that an electric field that changes in a time division multiplexing scheme is formed in the third time period and the fourth time period.

41. The stereoscopic imaging method according to claim 37, wherein the receiving the at least two voltages on each of the at least two second electrodes comprises:
receiving two voltages on each of two second electrodes connected to a resistive film of each electro-optic modulation unit of the multiple electro-optic modulation units, wherein the two voltages are different, and each of the electro-optic modulation units shares one second electrode with an adjacent electro-optic modulation unit, so that each of the electro-optic modulation units produces a function of a lens having a linear phase tilt under an effect of an electric field formed by the two voltages received on each of the two second electrodes and the reference voltage received on the at least two first electrodes used as common electrodes, to deflect a light ray into a preset projection direction.

42. The stereoscopic imaging method according to claim 41, wherein:
each electro-optic modulation unit of the multiple electro-optic modulation units deflects a light ray of an image displayed on a pixel unit corresponding to each of the electro-optic modulation units into a third projection direction in a third time period according to a third voltage configuration received between the two first electrodes and the at least two second electrodes used as common electrodes;
each electro-optic modulation unit of the multiple electro-optic modulation units deflects a light ray of an image displayed on the pixel unit corresponding to each of the electro-optic modulation units into a fourth projection direction in a fourth time period according to a fourth voltage configuration received between the two first electrodes used as common electrodes and the two second electrodes;
the adjacent electro-optic modulation unit deflects a light ray of an image displayed on a pixel unit corresponding to the adjacent electro-optic modulation unit into the fourth projection direction in the third time period according to the fourth voltage configuration received between two first electrodes used as common electrodes and at least two second electrodes of the adjacent electro-optic modulation unit; and
the adjacent electro-optic modulation unit deflects a light ray of an image displayed on the pixel unit corresponding to the adjacent electro-optic modulation unit into the third projection direction in the fourth time period according to the fourth voltage configuration received between the two second electrodes used as common electrodes and the two first electrodes of the adjacent electro-optic modulation unit, wherein the third voltage configuration is different from the fourth voltage configuration, so that an electric field that changes in a time division multiplexing scheme is formed in the third time period and the fourth time period.

43. A stereoscopic imaging method, comprising:
displaying images on multiple pixel units;
receiving a voltage configuration between at least two first electrodes and at least two second electrodes of each electro-optic modulation unit of multiple electro-optic modulation units, to form an electric field; and
deflecting a light ray of an image displayed on a pixel unit corresponding to each of the electro-optic modulation units into a preset projection direction according to the electric field, wherein an arrangement direction of the at least two first electrodes is different from an arrangement direction of the at least two second electrodes.

44. The stereoscopic imaging method according to claim 43, wherein the receiving a voltage configuration between at least two first electrodes and at least two second electrodes of each electro-optic modulation unit of multiple electro-optic modulation units, to form an electric field comprises:
when the stereoscopic imaging apparatus is in a first direction, receiving the at least two voltages on each of the at least two first electrodes, and using the at least two second electrodes as common electrodes to receive the reference voltage; and
when the stereoscopic imaging apparatus is in a second direction, using the at least two first electrodes as common electrodes to receive the reference voltage, and receiving the at least two voltages on each of the at least two second electrodes.

45. The stereoscopic imaging method according to claim 44, wherein the receiving the at least two voltages on each of the at least two first electrodes comprises:
receiving multiple voltages on each of multiple first electrodes, wherein at least two voltages of the multiple voltages are different, so that each of the electro-optic modulation units produces a function of an off-axis lens under an effect of an electric field formed by the multiple voltages received on each of the multiple first electrodes and the reference voltage received on the at least two second electrodes used as common electrodes, to deflect a light ray into a preset projection direction, wherein
the receiving the at least two voltages on each of the at least two second electrodes comprises:
receiving multiple voltages on each of multiple second electrodes, wherein at least two voltages of the multiple voltages are different, so that each of the electro-optic modulation units produces a function of an off-axis lens under an effect of an electric field formed by the multiple voltages received on each of the multiple second electrodes and the reference voltage received on the at least two first electrodes used as common electrodes, to deflect a light ray into a preset projection direction.

46. The stereoscopic imaging method according to claim 44, wherein the receiving the at least two voltages on each of the at least two first electrodes comprises:
receiving two voltages on each of two first electrodes connected to a resistive film, wherein the two voltages are different, so that each of the electro-optic modulation units produces a function of a lens having a linear phase tilt under an effect of an electric field formed by the two voltages received on each of the two first electrodes and the reference voltage received on the at least two second electrodes used as common electrodes, to deflect a light ray into a preset projection direction, wherein
the receiving the at least two voltages on each of the at least two second electrodes comprises:
receiving two voltages on each of two second electrodes connected to a resistive film, wherein the two voltages are different, so that each of the electro-optic modulation units produces a function of a lens having a linear phase tilt under an effect of an electric field formed by the two voltages received on each of the two second electrodes and the reference voltage received on the at least two first electrodes used as common electrodes, to deflect a light ray into a preset projection direction.

47. The stereoscopic imaging method according to claim 44, wherein the receiving the at least two voltages on each of the at least two first electrodes comprises:
receiving two voltages on each of two first electrodes connected to a resistive film, wherein the two voltages are different, and each of the electro-optic modulation units shares one first electrode with an adjacent electro-optic modulation unit, so that each of the electro-optic modulation units produces a function of a lens having a linear phase tilt under an effect of an electric field formed by the two voltages received on each of the two first electrodes and the reference voltage received on the at least two second electrodes used as common electrodes, to deflect a light ray into a preset projection direction, wherein
the receiving the at least two voltages on each of the at least two second electrodes comprises:
receiving two voltages on each of two second electrodes connected to a resistive film, wherein the two voltages are different, and each of the electro-optic modulation units shares one second electrode with an adjacent electro-optic modulation unit, so that each of the electro-optic modulation units produces a function of a lens having a linear phase tilt under an effect of an electric field formed by the two voltages received on each of the two second electrodes and the reference voltage received on the at least two first electrodes used as common electrodes, to deflect a light ray into a preset projection direction.

48. The stereoscopic imaging method according to claims 43 to 47, wherein the multiple electro-optic modulation units are in a one-to-one correspondence with the multiple pixel units, and the displaying images of different projection directions on multiple pixel units comprises:
displaying the images on the multiple pixel units in a time division multiplexing scheme, wherein
the receiving a voltage configuration between at least two first electrodes and at least two second electrodes of each electro-optic modulation unit of multiple electro-optic modulation units, to form an electric field comprises:
receiving a voltage configuration that changes in a time division multiplexing scheme between the at least two first electrodes and the at least two second electrodes of each electro-optic modulation unit of the multiple electro-optic modulation units, to form an electric field that changes in a time division multiplexing scheme, wherein the electric field that changes in a time division multiplexing scheme changes synchronously with the image displayed in a time division multiplexing scheme.
